# EUROPEAN PATENT SPECIFICATION

(11) **EP 4 207 693 B1**
(45) Date of publication and mention of the grant of the patent: **26.03.2025**
(21) Application number: 21861569.8
(22) Date of filing: 24.08.2021
(51) Int. Cl.: H04L 13/00, G06F 13/40, G06F 13/42

(54) **COMMUNICATION DEVICE, COMMUNICATION SYSTEM, AND COMMUNICATION METHOD**
KOMMUNIKATIONSVORRICHTUNG, KOMMUNIKATIONSSYSTEM UND KOMMUNIKATIONSVERFAHREN
DISPOSITIF DE COMMUNICATION, SYSTÈME DE COMMUNICATION ET PROCÉDÉ DE COMMUNICATION

(30) Priority: 27.08.2020 US 202063071119 P; 18.08.2021 US 202117405334
(43) Date of publication of application: 05.07.2023
(73) Proprietor: Sony Semiconductor Solutions Corporation, Atsugi-shi, Kanagawa 243-0014 (JP)
(72) Inventor: HYAKUDAI Toshihisa, Paramus. New Jersey 07652 (US); YAMADA Junya, Atsugi-shi, Kanagawa 243-0014 (JP); OTA Satoshi, Atsugi-shi, Kanagawa 243-0014 (JP)
(74) Representative: MFG Patentanwälte Meyer-Wildhagen Meggle-Freund Gerhard PartG mbB
(86) International application number: PCT/JP2021/031014
(87) International publication number: WO 2022/045144

(56) References cited:
- JP-A- 2015 080 045
- JP-A- 2018 046 547
- JP-A- 2018 056 682
- US-A1- 2012 017 223

## Description

### [Technical Field]

The present disclosure relates to a communication device, a communication system, and a communication method.

### [Background Art]

A technology of performing high-speed serial communication between a SerDes for a Master and a SerDes for a Slave has been proposed (see PTL 1).
PTL 2 describes a wireless protocol may be implemented in a smart transceiver device that contains the physical (PHY) and media access control (MAC) layers of the wireless protocol stack.

In a case where serial communication is performed between two SerDeses, an FDD (Frequency Division Duplexing) method or a TDD (Time Division Duplex) method is used, for example. In a case where the amount of data transmitted from one SerDes to the other SerDes is significantly different from the amount of data transmitted from the other SerDes to the one SerDes, the TDD method may be adopted to make the uplink data transmission capacity different from the downlink data transmission capacity. The TDD method is a half-duplex communication method in which communication can be performed in only one direction because uplink communication and downlink communication cannot be simultaneously performed.

### [Citation List]

### [Patent Literature]

[PTL 1]
   Japanese Patent Laid-open No. 2011-239011
[PTL 2]
   US patent application US 2012/017223 A1

### [Summary]

### [Technical Problem]

One of the serial communication standards is called SPI (Serial Peripheral Interface). SPI is a full-duplex communication method in which uplink communication and downlink communication can be simultaneously performed. In a certain case, while the abovementioned two SerDeses are respectively performing SPI communication with the other communication devices, SPI data is transmitted via each of the abovementioned two SerDeses to a communication device connected to the counterpart-side SerDes which is connected to the SerDes itself. In a case where these SerDeses communicate with each other by the TDD method, the SPI data for a full-duplex communication method cannot be transmitted by the TDD method which is a half-duplex communication method.

Thus, the present disclosure is to provide a communication device, a communication system, and a communication method by which high-speed serial communication can be performed by a combination of different communication methods.

### [Solution to Problem]

According to a first aspect, the present invention provides a communication device according to independent claim 1. According to a second aspect, the present invention provides a communication device according to independent claim 12. According to a third aspect, the present invention provides a communication system communication system according to independent claim 14. According to a fourth aspect, the present invention provides a communication method according to independent claim 15. Further aspects of the present invention are set forth in the dependent claims, the drawings and the following description.

In order to solve the abovementioned problems, the present disclosure provides a communication device including a communication section that transmits, by a batch of data blocks, an SPI (Serial Peripheral Interface)-compliant serial signal group transmitted from a Master in synchronization with a clock, to a communication partner device within one frame period of a predetermined communication protocol or transmits the serial signal group by multiple data blocks divided according to multiple frame periods, to the communication partner device.

The communication device further includes a memory that saves an SPI-compliant first serial signal group transmitted from the Master in synchronization with the clock and saves an SPI-compliant second serial signal group transmitted from a Slave in synchronization with the clock, a packet encoder that converts the first serial signal group saved in the memory into a first packet of the predetermined communication protocol, and a packet decoder that converts a second packet of the predetermined communication protocol received from the communication partner device into the second serial signal group.

The first packet includes frequency information regarding the clock and may further include polarity information regarding the clock, and phase information regarding the clock with respect to a data signal of the SPI-compliant first serial signal group.

The first packet may include information indicating that the batch of data blocks is included in the one frame period or information indicating that the multiple data blocks divided according to the multiple frame periods are included.

In a case where the first packet includes the multiple data blocks, the first packet may include the total number of the data blocks and information regarding division positions of the data blocks.

The first packet may include information regarding a size of the data block.

The first packet may include information indicating whether the data block is valid or invalid.

The first packet may include information indicating a reset of the Slave.

The second packet may include at least one of information indicating an operation state of the Slave and interrupt information from the Slave.

In a case where the interrupt information is included in the second packet and in a case where the second packet itself arrives at the memory from the communication partner device, the memory may determine that the Slave has requested to read out a state of the Slave and transmit an interrupt signal to the Master.

The first packet may include information regarding a Slave select signal which is included in the SPI-compliant first serial signal group and by which the communication partner device or the Slave is selected.

The packet encoder may transmit the first packet to, as a destination, the communication partner device or the Slave selected by the Slave select signal.

The communication device may further include a shift register that sequentially saves each of serial signals included in the first serial signal group, in the memory in synchronization with the clock and sequentially transmits each of serial signals included in the second serial signal group, to the Master in synchronization with the clock.

The communication section may transmit the first packet at a first timing that is determined by the predetermined communication protocol and receive the second packet at a second timing that is determined by the predetermined communication protocol.

When a Slave select signal transmitted from the Master is changed from a first logic to a second logic, the packet encoder may determine that transmission of the first serial signal group from the Master is completed.

The communication section may transmit and receive the first packet and the second packet to and from the communication partner device by the communication protocol according to TDD (Time Division Duplex).

The present disclosure provides a communication device including a communication section that, in synchronization with a clock generated on the basis of clock frequency information included in a packet supplied from a communication partner device, transmits an SPI-compliant serial signal group transmitted from a Slave, to a communication partner device by a batch of data blocks within one frame period of a predetermined communication protocol, or transmits the serial signal group by multiple data blocks divided according to multiple frame periods, to the communication partner device.

The communication device further includes a packet decoder that converts a first packet of the predetermined communication protocol received from the communication partner device into an SPI-compliant first serial signal group, a clock generator that generates the clock based on the clock frequency information included in the first serial signal group, a memory that saves the first serial signal group in synchronization with the clock and saves an SPI-compliant second serial signal group transmitted from a Slave in synchronization with the clock, and a packet encoder that converts the second serial signal group saved in the memory into a second packet of the predetermined communication protocol.

The second packet may include information indicating that a batch of data blocks to be transmitted within one frame period of the second serial signal group is included or information indicating that multiple data blocks to be dividedly transmitted according to multiple frame periods are included.

The second packet may include information indicating whether or not the Slave is in a busy state of being unable to receive the first serial signal group and information indicating whether or not an error is included in the first serial signal group received by the Slave.

The second packet may include interrupt information that is a request to cause a Master to read out a state of the Slave.

The communication device may further include a shift register that saves, in the memory, each of serial signals included in the second serial signal group and transmits each of serial signals included in the first serial signal group to the Slave.

The communication section may transmit the second packet at a first timing that is determined by the predetermined communication protocol and receive the first packet at a second timing that is determined by the predetermined communication protocol.

The communication section may transmit and receive the first packet and the second packet to and from the communication partner device by the communication protocol according to TDD (Time Division Duplex).

The present disclosure provides a communication system including a first communication device and a second communication device that transmit and receive a packet by a predetermined communication protocol, in which the first communication device includes a first communication section that transmits, by a batch of data blocks, an SPI (Serial Peripheral Interface)-compliant first serial signal group transmitted from a Master in synchronization with a clock, to the second communication device within one frame period of a predetermined communication protocol or transmits the serial signal group by multiple data blocks divided according to multiple frame periods, to the second communication device, and the second communication device transmits, in synchronization with a clock generated on the basis of clock frequency information included in a packet supplied from the first communication device, an SPI-compliant second serial signal group transmitted from a Slave, by a batch of data blocks, to the first communication device within one frame period of a predetermined communication protocol, or transmits the serial signal group by multiple data blocks divided according to multiple frame periods, to the first communication device.

The first communication device may include a first memory that saves the first serial signal group transmitted from the Master in synchronization with a first clock and saves the second serial signal group transmitted from a Slave in synchronization with the first clock, a first packet encoder that converts the first serial signal group saved in the first memory into a first packet of the predetermined communication protocol, a first packet decoder that converts a second packet of the predetermined communication protocol received from the second communication device into the second serial signal group, and the first communication section that transmits the first packet at a timing determined by the predetermined communication protocol and receives the second packet at a timing determined by the predetermined communication protocol, and the second communication device may include a second packet decoder that converts the received first packet into the first serial signal group, a clock generator that generates a second clock based on the clock frequency information included in the first serial signal group, a second memory that saves the first serial signal group in synchronization with the second clock and saves the second serial signal group transmitted from the Slave in synchronization with the second clock, a packet encoder that converts the second serial signal group saved in the second memory into the second packet, and a second communication section that transmits the second packet at a timing determined by the predetermined communication protocol and receives the first packet at a timing determined by the predetermined communication protocol.

The present disclosure provides a communication method including a communication section that transmits, by a batch of data blocks, an SPI-compliant serial signal group transmitted from a Master in synchronization with a clock, to a communication partner device within one frame period of a predetermined communication protocol or transmits the serial signal group by multiple data blocks divided according to multiple frame periods, to the communication partner device.

### [Brief Description of Drawings]

[FIG. 1]

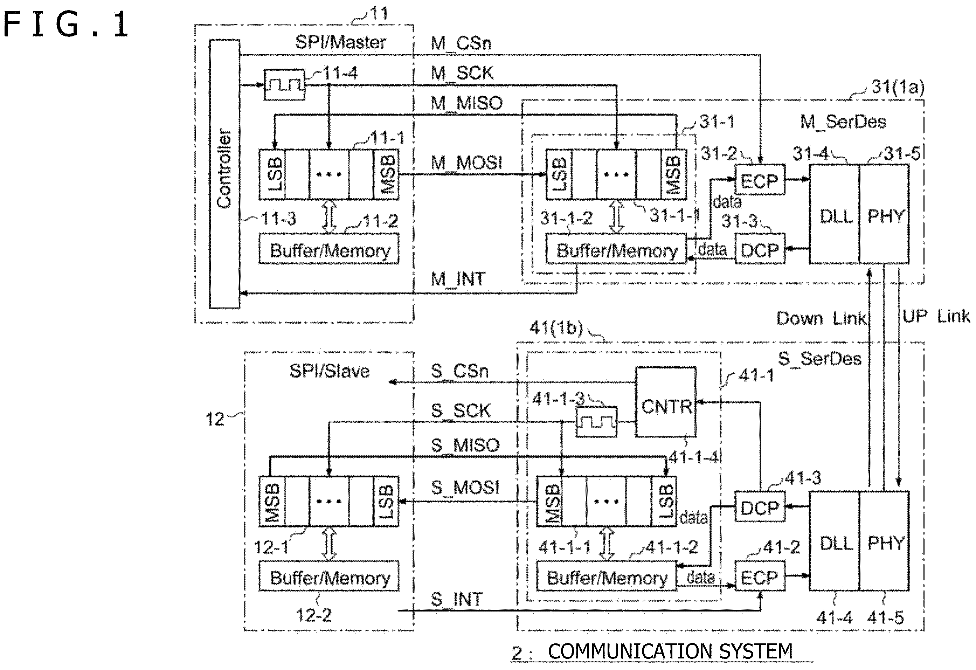

   FIG. 1 is a block diagram depicting a schematic configuration of a communication system including a communication device according to a first embodiment.
[FIG. 2]

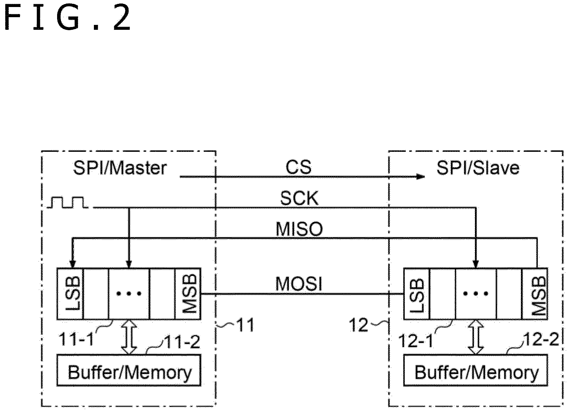

   FIG. 2 is a block diagram of a part that is related to SPI communication between an SPI/Master and an SPI/Slave.
[FIG. 3]

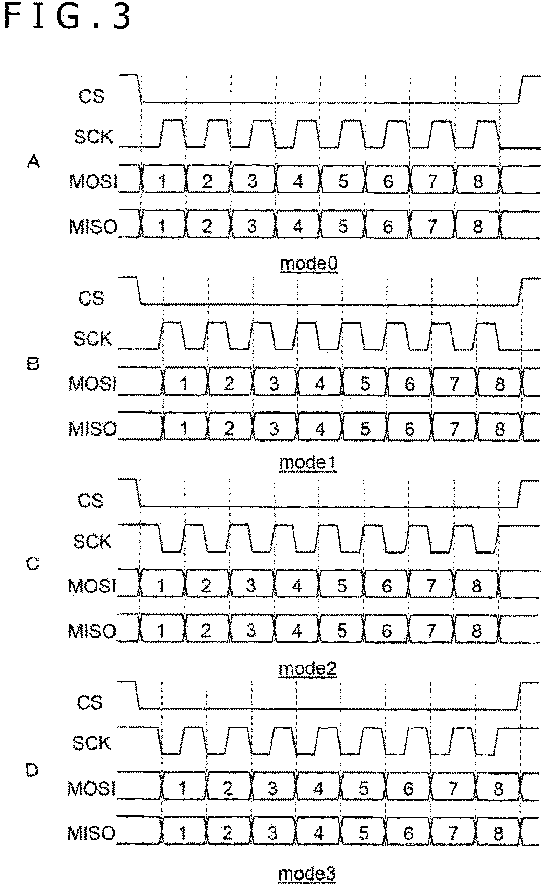

   FIG. 3 depicts basic signal waveform diagrams of an SPI protocol.
[FIG. 4]

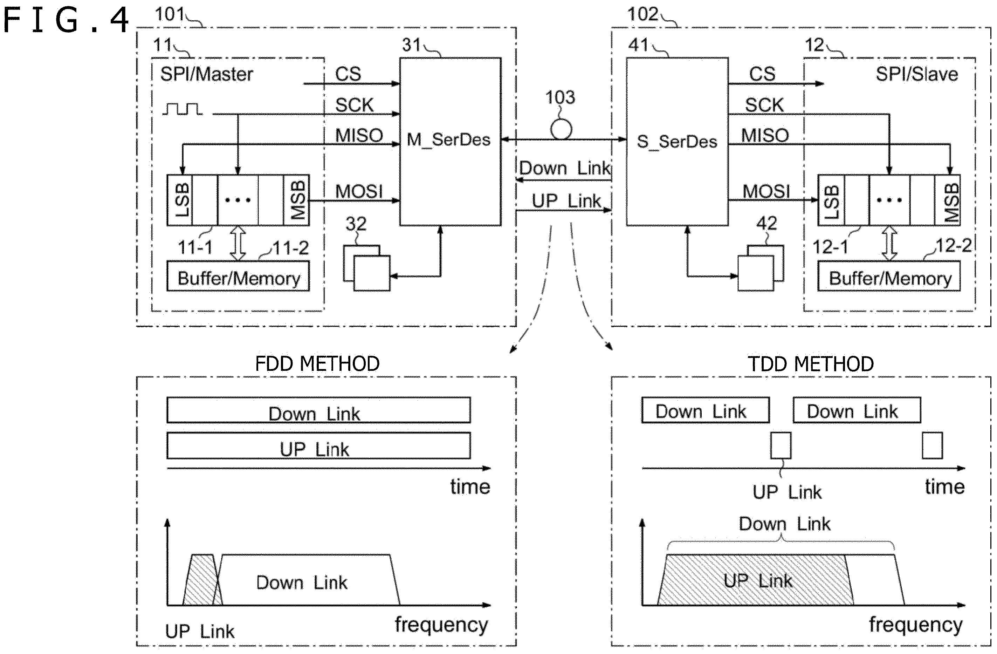

   FIG. 4 is a diagram for explaining a TDD method that is performed between an M_SerDes and an S_SerDes in FIG. 1.
[FIG. 5]

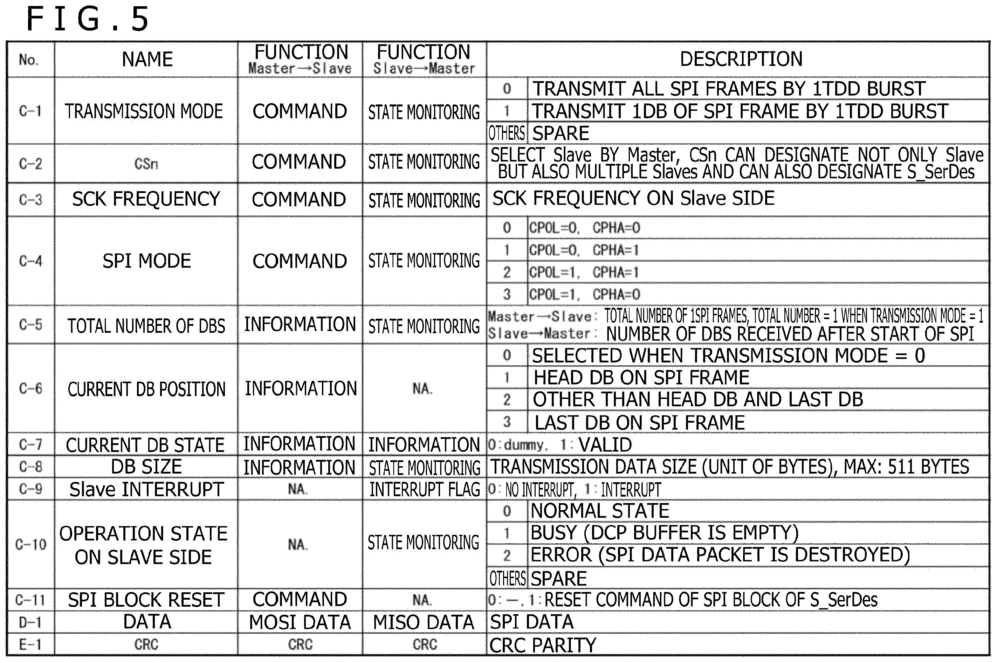

   FIG. 5 is a diagram for explaining information that is included in a transmission packet generated by an ECP.
[FIG. 6]

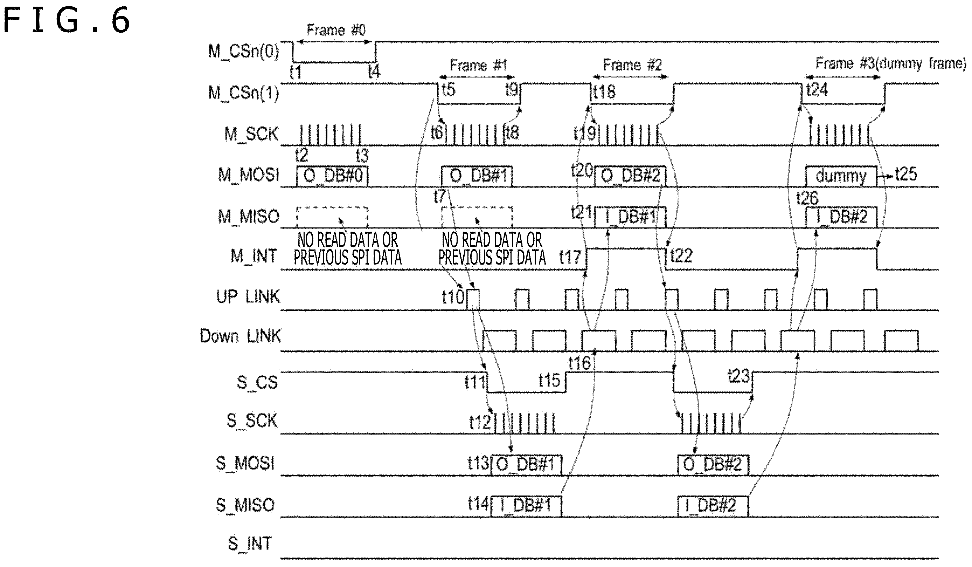

   FIG. 6 is a timing chart of communication that an SPI/Master performs with an SPI/Slave.
[FIG. 7A]

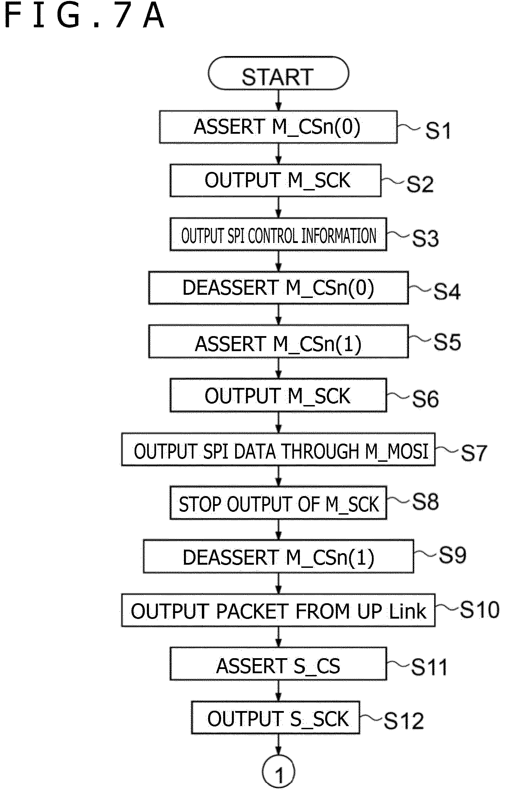

   FIG. 7A is a flowchart illustrating a processing procedure in which an SPI/Master communicates with an SPI/Slave.
[FIG. 7B]

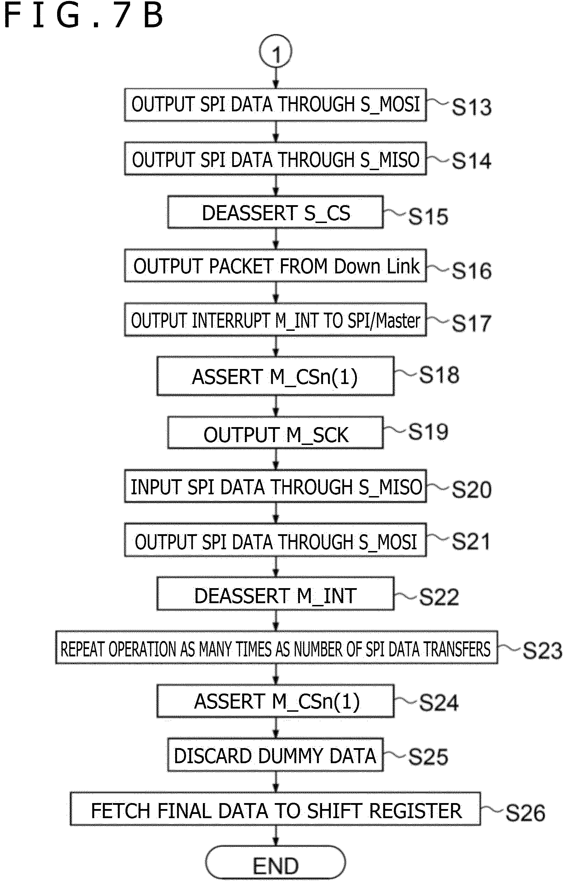

   FIG. 7B is a flowchart which is a continuation of FIG. 7A.
[FIG. 8]

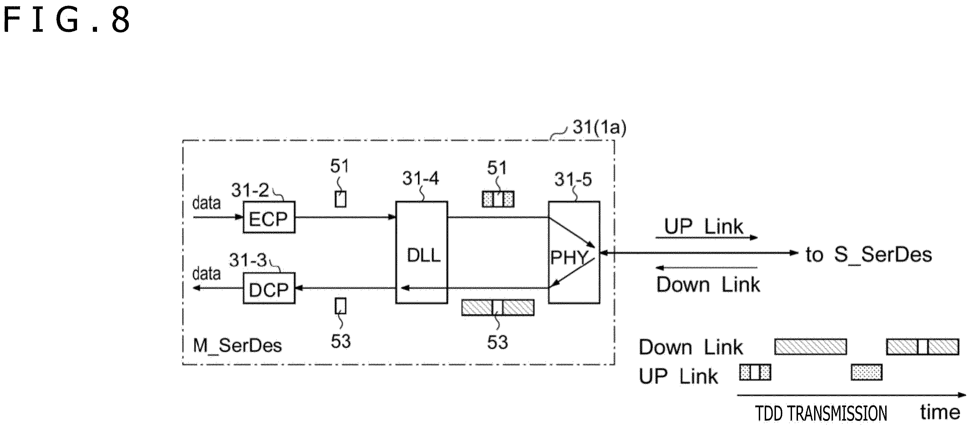

   FIG. 8 is a diagram schematically depicting packets that are transmitted and received by an UP Link and a Down Link.
[FIG. 9]

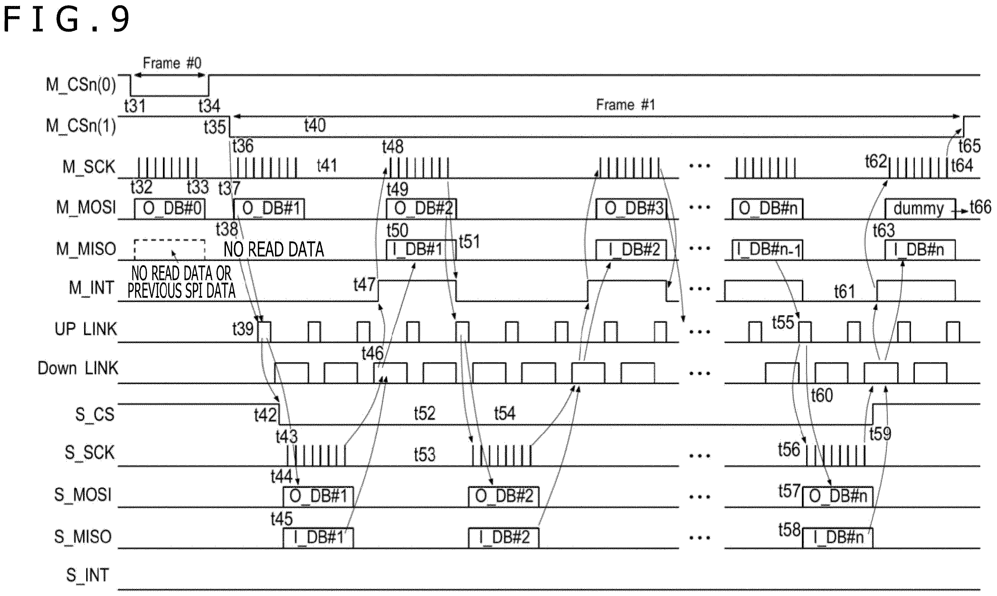

   FIG. 9 is a timing chart of a case where a process of transmitting divided data pieces within one frame period is repeated by multiple frames.
[FIG. 10A]

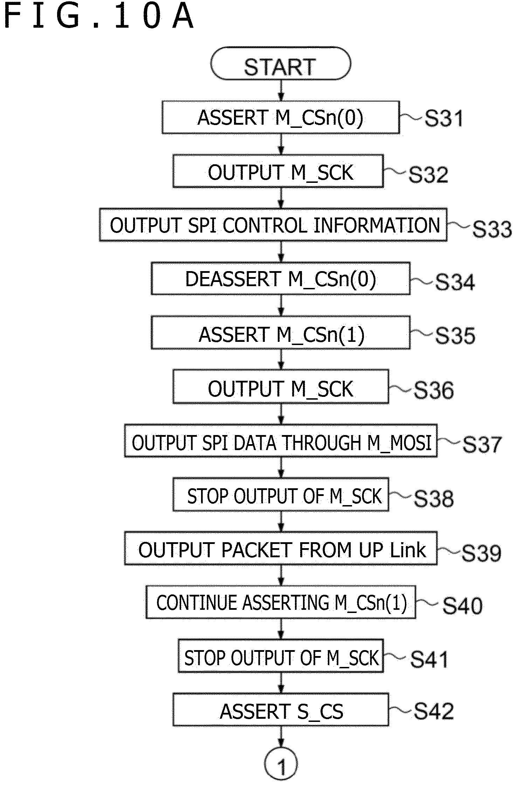

   FIG. 10A is a flowchart illustrating a processing procedure in which a communication system that operates in accordance with the timings in FIG. 9.
[FIG. 10B]

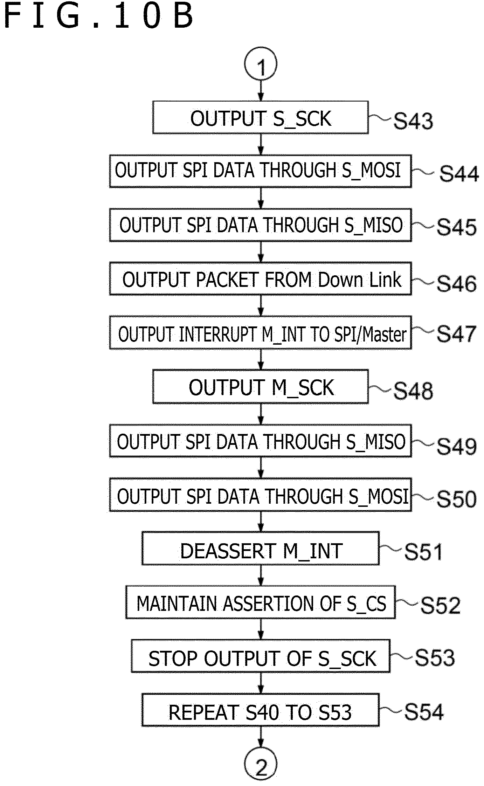

   FIG. 10B is a flowchart which is a continuation of FIG. 10A.
[FIG. 10C]

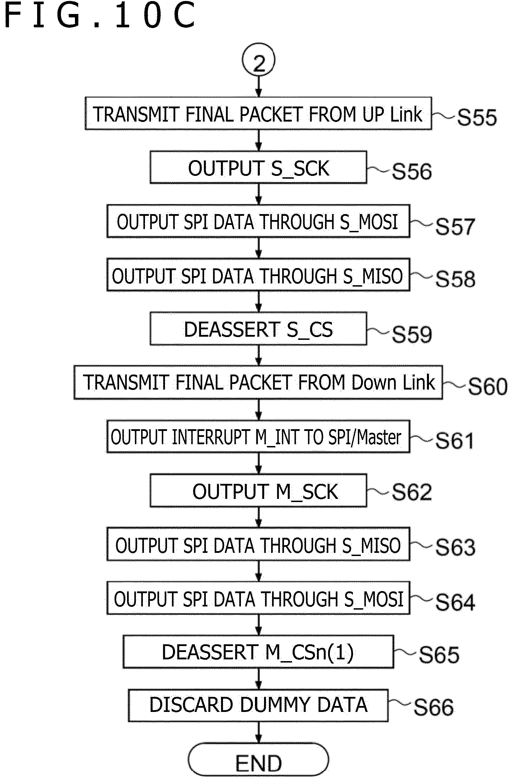

   FIG. 10C is a flowchart which is a continuation of FIG. 10B.
[FIG. 11]

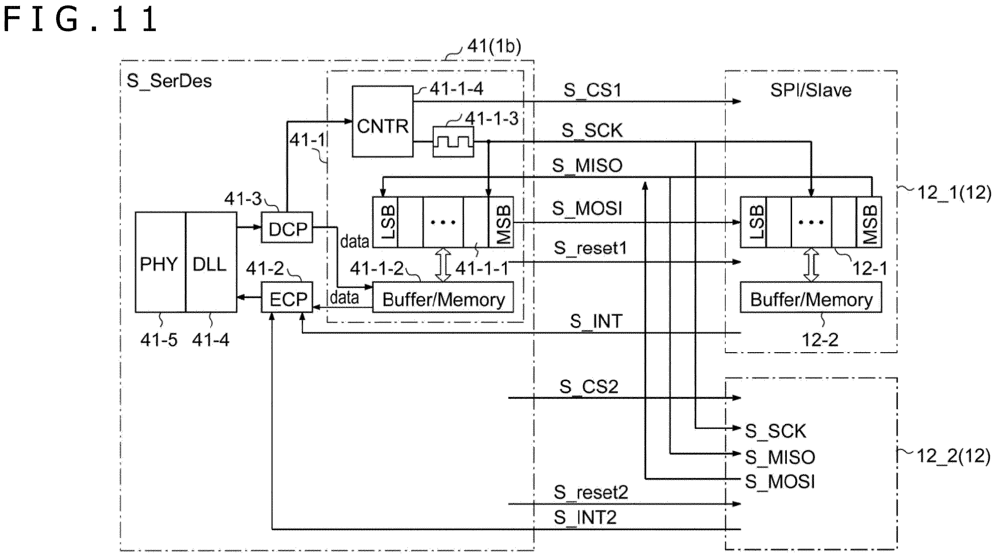

   FIG. 11 is a block diagram of a main part of a communication system including a communication device according to a third embodiment.
[FIG. 12]

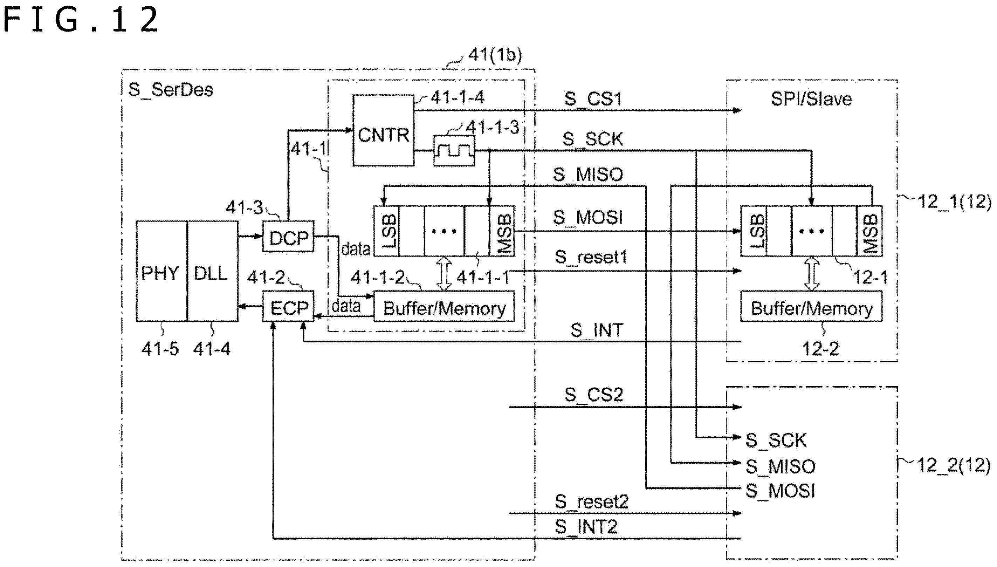

   FIG. 12 is a block diagram of a main part of a communication system including a communication device according to one modification of FIG. 11.

### [Description of Embodiments]

Hereinafter, embodiments of a communication device, a communication system, and a communication method will be explained with reference to the drawings. An explanation of important constituent parts of the communication device, the communication system, and the communication method will be mainly given below but the communication device, the communication system, and the communication method can include any other constituent parts or functions that are not depicted or explained. The following explanation is not intended to exclude any other constituent parts or functions that are not depicted or explained.

### (First Embodiment)

FIG. 1 is a block diagram depicting a schematic configuration of a communication system 2 including communication devices 1a and 1b according to the first embodiment. The communication system 2 in FIG. 1 includes an SPI/Master 11, a Master SerDes (M_SerDes) 31, an SPI/Slave 12, and a Slave SerDes (S_SerDes) 41. The M_SerDes 31 corresponds to the communication device 1a while the S_SerDes 41 corresponds to the communication device 1b.

The SPI/Master 11 and the M_SerDes 31 perform SPI-compliant serial communication (hereinafter, referred to as SPI communication in some cases). Similarly, the SPI/Slave 12 and the S_SerDes 41 perform SPI-compliant serial communication (SPI communication). The M_SerDes 31 and the S_SerDes 41 perform high-speed serial communication by a TDD method. In FIG. 1, a path of signal transmission from the M_SerDes 31 to the S_SerDes 41 and a path of signal transmission from the S_SerDes 41 to the M_SerDes 31 are referred to as an UP Link and a Down Link, respectively. In the SPI communication, serial communication is performed by a protocol (hereinafter, referred to as an SPI protocol) conforming to the SPI standard. In addition, in the present description, serial data that is transmitted and received by SPI communication may be referred to as SPI data.

As explained later, the M_SerDes 31 includes a communication section (DLL 31-4) that transmits an SPI (Serial Peripheral Interface)-compliant serial signal group transmitted from a Master (SPI_Master 11) in synchronization with a clock, to a communication partner device (S_SerDes 41) by a batch of data blocks within one frame period of a predetermined communication protocol or transmits the SPI-compliant serial signal group to the communication partner device (S_SerDes 41) by multiple data blocks divided according to multiple frame periods. Also, the S_SerDes 41 includes a communication section (DLL 41-4) that, in synchronization with a clock generated on the basis of clock frequency information included in a packet supplied by a communication partner device (M_SerDes 31), transmits an SPI-compliant serial signal group transmitted from a Slave (SPI_Slave 12) to a communication partner device (M_SerDes 31) by a batch of data blocks within one frame period of a predetermined communication protocol or transmits the SPI-compliant serial signal group to the communication partner device (M_SerDes 31) by multiple data blocks divided according to multiple frame periods.

FIG. 2 is a block diagram of a part that is related to SPI communication between the SPI/Master 11 and the SPI/Slave 12. It is to be noted that FIG. 2 depicts an example in which SPI-compliant serial communication is performed directly between the SPI/Master 11 and the SPI/Slave 12, for simplification of the explanation.

As depicted in FIG. 2, the SPI/Master 11 includes a shift register 11-1 and a buffer/memory 11-2. Similarly, the SPI/Slave 12 includes a shift register 12-1 and a buffer/memory 12-2.

The shift register 12-1 of the SPI/Slave 12 operates in synchronization with a clock SCK which is supplied from the SPI/Master 11. The shift register 11-1 of the SPI/Master 11 sequentially outputs serial data through an MSB (Most Significant Bit) side in synchronization with the SCK. The outputted serial data is inputted to an LSB (Least Significant Bit) side of the shift register 12-1 of the SPI/Slave 12 through a MOSI pin. Serial data outputted from an MSB side of the shift register 12-1 of the SPI/Slave 12 is inputted to an LSB side of the shift register 11-1 of the SPI/Master 11 through a MISO pin. Data held in the shift register 11-1 of the SPI/Master 11 can be saved in the buffer/memory 11-2. Further, the shift register 11-1 can hold data saved in the buffer/memory 11-2. Similarly, data held in the shift register 12-1 of the SPI/Slave 12 can be saved in the buffer/memory 12-2. Further, the shift register 12-1 can hold data saved in the buffer/memory 12-2.

FIG. 3 depicts basic signal waveform diagrams of an SPI protocol. In the SPI protocol, there are four combinations of the polarity of the SCK when a Slave selector signal (CS signal) outputted from the SPI/Master 11 is idle (high level in FIG. 3) and an edge (a rising edge or a falling edge) of the clock (SCK) where data is latched when the CS signal enters an active state (low level in FIG. 3). These four combinations are called SPI modes. The SPI/Master 11 can optionally select one from among the four SPI modes. The SPI/Master 11 has known an SPI mode that can be supported by the SPI/Salve, and thus needs to select a mode corresponding to the supportable mode.

FIG. 3A to 3D are signal waveform diagrams of the four SPI modes. In SPI mode=0 depicted in FIG. 3A, the SCK is Low when the CS signal is idle, and data is held when the SCK rises. In SPI mode=1 depicted in FIG. 3B, the SCK is Low when the CS signal is idle, and data is held when the SCK falls. In SPI mode=2 depicted in FIG. 3C, the SCK is High when the CS signal is idle, and data is held when the SCK rises. In SPI mode=3 depicted in FIG. 3D, the SCK is High when the CS signal is idle, data is held when the SCK rises.

The frequency of the SCK is not defined by the SPI protocol and varies for respective devices that perform SPI communication. The SPI/Master 11 selects the frequency of the SCK for each of the devices to perform the SPI communication. For this reason, the SPI/Master 11 needs to previously know an SCK frequency that can be supported by each of the devices to perform SPI communication.

Hereinafter, a communication method using the SPI protocol will be explained. In the example of FIG. 2, communication using the SPI protocol is performed between the SPI/Master 11 and the SPI/Slave 12. The number of the SPI/Slaves 12 which are connected to the SPI/Master 11 may be one or more. In a case where two or more SPI/Slaves 12 are connected to the SPI/Master 11, the SPI/Master 11 has multiple CS signals corresponding to the respective SPI/Slaves 12, and uses a corresponding CS signal to select a Slave to communicate with, so that communication with the Slave can be performed. A CS signal with which the SPI/Master 11 selects an SPI/Slave 12 to communicate is included in SPI control information, as explained later. The SPI/Master 11 transmits SPI data including the SPI control information to the M_SerDes 31.

In a case of performing SPI communication, the SPI/Master 11 activates a CS signal (Low in FIG. 3A to 3D) connected to the SPI/Slave 12 to communicate with. In the present description, asserting refers to bringing any signal into an active state, and deasserting refers to bringing any signal into an idle state, in some cases.

The SPI/Master 11 and the SPI/Slave 12 transfer data to be transferred, from the buffer/memories 11-2 and 12-2 to the shift registers 11-1 and 12-1, respectively. The SPI/Master 11 generates an SCK and supplies the SCK not only to the shift register 11-1 but also to the shift register 12-1 of the SPI/Slave 12. The shift registers 11-1 and 12-1 each shift the held data by 1 bit with a toggle of the SCK. As a result of the SCK toggling by the number of stages of the shift registers 11-1 and 12-1, the data in the shift registers 11-1 and 12-1 is replaced. Subsequently, the SPI/Master 11 brings the CS signal into an idle state (High in FIG. 3A to 3D). By transferring the current data in the shift registers 11-1 and 12-1 to the buffer/memories 11-2 and 12-2, the SPI/Master 11 and the SPI/Slave 12 can obtain the data from the buffer/memories 11-2 and 12-2. Then, the SPI communication is finished.

While FIG. 2 depicts an example in which SPI communication is performed directly between the SPI/Master 11 and the SPI/Slave 12, FIG. 1 depicts that the M_SerDes 31 and the S_SerDes 41 are disposed between the SPI/Master 11 and the M_SerDes 31. In FIG. 1, the SPI/Master 11 performs SPI communication with the M_SerDes 31, the M_SerDes 31 and the S_SerDes 41 perform serial communication with each other by a TDD method, and the SPI/Slave 12 and the S_SerDes 41 perform SPI communication with each other.

FIG. 4 is a diagram for explaining a TDD method that is performed between the M_SerDes 31 and the S_SerDes 41 in FIG. 1. In FIG. 4, a simplified internal configuration of the SPI/Master 11 and the SPI/Slave 12 depicted in FIG. 1 is depicted. In addition, FIG. 4 depicts an example in which peripheral devices 32 and 42 are connected to the M_SerDes 31 and the S_SerDes 41, respectively.

The M_SerDes 31 and the S_SerDes 41 are connected to each other via a cable 103 having a length of several meters to over ten meters, for example. Via the cable 103, high-speed serial communication is performed between the M_SerDes 31 and the S_SerDes 41. It is to be noted that two or more devices may perform serial communication with the M_SerDes 31. In this case, each of these devices has a configuration similar to that of the S_SerDes 41 in FIG. 4. Also, multiple pairs of devices that have configurations similar to those of the M_SerDes 31 and the S_SerDes 41 in FIG. 4 may be provided so that each of the pairs perform high-serial communication. The M_SerDes 31 and the S_SerDes 41 in FIG. 4 are applicable to a wide variety of uses such as on-vehicle camera modules for transmitting and receiving a large amount of data, for example.

The M_SerDes 31 and the S_SerDes 41 perform high-speed serial communication by the TDD method. A timing and a frequency band in the TDD method are depicted in the lower right of FIG. 4. In the TDD method, an uplink signal transmission period and a downlink signal transmission period are provided so as not to temporally overlap each other within one TDD cycle, as depicted on the right side of FIG. 4. The TDD timing chart in FIG. 4 illustrates an example in which a signal transmission period of an uplink signal (referred to as an UP Link) from the M_SerDes 31 to the S_SerDes 41 is excessively shorter than a signal transmission period of a downlink signal (referred to as a Down Link) from the S_SerDes 41 to the M_SerDes 31, that is, an example in which the signal ratio of the UP Link is excessively smaller than the signal ratio of the Downlink. For example, in a case where a video signal taken by a sensor in the S_SerDes 41 is transmitted to the M_SerDes 31, the signal ratio becomes a ratio such as that illustrated in the TDD timing chart in FIG. 4.

A frequency band that is used for UP Link signal transmission and a frequency band that is used for Down Link signal transmission in the TDD method are depicted on the right side of FIG. 4. As depicted in FIG. 4, the frequency bands of the UP Link signal transmission and the Down Link signal transmission mostly overlap each other in the TDD method. For example, in a case where a video signal taken by a sensor in the S_SerDes 41 is transmitted to the M_SerDes 31, the Down Link signal transmission is carried out by a wider frequency band including a frequency band that is used for the UP Link signal transmission because the Down Link signal transmission whose signal amount is large needs a frequency band wider than that of the UP Link signal transmission. Since the Down Link signal transmission period does not overlap with the UP Link signal transmission period in the TDD method, an echo cancellation circuit for separating these signals is unnecessary.

To carry out signal transmission by the TDD method is a prerequisite for the M_SerDes 31 and the S_SerDes 41 according to the present embodiment. However, the M_SerDes 31 and the S_SerDes 41 may carry out signal transmission by an FDD method in some cases. A timing and a frequency band in the FDD method are depicted in the lower left of FIG. 4. In the FDD method, a frequency band that is used for signal transmission from the M_SerDes 31 to the S_SerDes 41 differs from a frequency band that is used for signal transmission from the S_SerDes 41 to the M_SerDes 31. For this reason, the signal transmission from the M_SerDes 31 to the S_SerDes 41 and the signal transmission from the S_SerDes 41 to the M_SerDes 31 can be carried out at the same timing, and the uplink signal transmission and the downlink signal transmission can be carried out by using the entirety of one FDD cycle.

Further, in the FDD method, uplink signal transmission whose signal amount is large is carried out by using a wide frequency band on the high frequency side. Downlink signal transmission whose signal amount is small is carried out by using a narrow frequency band on the low frequency side. In the lower left example in FIG. 4, a frequency band that is used for the uplink signal transmission and a frequency band that is used for the downlink signal transmission partially overlap each other in order to increase the efficiency of using frequencies. Due to this overlapping part, an echo cancellation circuit is required. The echo cancellation circuit is configured to separate an uplink signal and a downlink signal with high accuracy.

An example, in which high-speed serial communication is performed between the M_SerDes 31 and the S_SerDes 41 by the TDD method, the M_SerDes 31 performs SPI-compliant serial communication with the SPI/Master 11, and the S_SerDes 41 performs SPI-compliant serial communication with the SPI/Slave 12, will be given below.

Since serial communication not by SPI but by the TDD method is performed between the M_SerDes 31 and the S_SerDes 41, it is necessary to perform protocol conversion in the M_SerDes 31 and the S_SerDes 41. Further, serial communication by the TDD method is a half-duplex communication method, whereas serial communication by SPI is a full-duplex communication method. Therefore, data supplied from the SPI/Master 11 or an SPI_Slave cannot be transmitted and received at an unchanged timing in the TDD method.

A detailed explanation of the configuration of the communication system 2 in FIG. 1 will be given below. The SPI/Master 11 in FIG. 1 includes a controller 11-3 and an SCK generator 11-4, in addition to the shift register 11-1 and the buffer/memory 11-2, as depicted in FIG. 4.

The controller 11-3 supplies a Slave select signal (CS signal) for activating SPI communication to the M_SerDes 31 through an M_CSn pin. The CS signals are provided by the number of devices to perform SPI communication with the SPI/Master 11. For example, in FIG. 1, different M_CSn pins are allocated to the M_SerDes 31, the S_SerDes 41, and the SPI/Slave 12. In the present description, a pin that outputs a CS signal outputted from the SPI/Master 11 is expressed as M_CSn(x) in some cases. For example, M_CSn(0) is allocated to the M_SerDes 31 while M_CSn(1) is allocated to the SPI/Slave 12.

The controller 11-3 controls operation of the SCK generator 11-4. The SCK generator 11-4 outputs the SCK when any of the CS signals is in an active state. The shift register 11-1 performs a shift operation in synchronization with the SCK.

The controller 11-3 detects, from an interrupt signal M_INT supplied from the M_SerDes 31, that the SPI/Slave 12 has outputted an interrupt signal S_INT. The interrupt signal M_INT is a trigger for causing the controller 11-3 to start SPI communication for the next frame. Alternatively, also in a case where SPI data is to be transmitted from the controller 11-3, SPI communication is similarly started (time t5 of M_CSn(1) in FIG. 6 to be explained later).

The M_SerDes 31 is connected to the SPI/Master 11. The M_SerDes 31 includes an SPI block 31-1 for performing data communication with the SPI/Master 11 in accordance with the SPI protocol. The SPI block 31-1 includes a shift register 31-1-1 and a buffer/memory 31-1-2. When the controller 11-3 of the SPI/Master 11 activates a CS signal for the M_SerDes 31 and the SCK generator 41-1-3 outputs an SCK, the shift register 31-1-1 outputs SPI data in synchronization with the SCK, and the SPI data is supplied to the SPI/Master 11 through the MISO pin. Further, in synchronization with the SCK, the shift register 31-1-1 fetches the SPI data outputted from the SPI/Master 11 through the MOSI pin.

When the CS signal enters an idle state, the controller 11-3 causes the SCK generator 11-4 to stop outputting the SCK. As a result, the state of the shift register 31-1-1 immediately before the stop of the SCK is held.

When the CS signal enters an idle state, the SPI block 31-1 of the M_SerDes 31 transfers all the data pieces in the shift register 31-1-1 to the buffer/memory 31-1-2. As a result, data transfer process from the SPI/Master 11 to the M_SerDes 31 according to the SPI protocol is finished.

It is to be noted that data transfer from the shift register 31-1-1 to the buffer/memory 31-1-2 in the M_SerDes 31 depends on an amount of data that the SPI/Master 11 desires to transfer and the data capacity of the shift register 31-1-1. Therefore, in a case where there is a possibility that the data in the shift register 31-1-1 overflows during the active state of the CS signal, the data in the shift register 31-1-1 is transferred to the buffer/memory 31-1-2 before overflowing. Accordingly, data omission can be prevented.

Besides, the M_SerDes 31 includes a packet encoder (ECP) 31-2, a packet decoder (DCP) 31-3, the DLL 31-4, and a PHY layer block (PHY) 31-5. The ECP 31-2 of the M_SerDes 31 converts SPI data saved in the buffer/memory 31-1-2, into a packet (SPI packet) that conforms to the TDD method. The DLL 31-4 generates an UP Link packet by combining the SPI packet generated by the ECP 31-2 with the other transmission packets other than the SPI packet. The PHY 31-5 transmits the UP Link packet to the S_SerDes 41 through an UP Link.

The S_SerDes 41 in FIG. 1 is connected to the SPI/Slave 12. The S_SerDes 41 includes an SPI block 41-1 for transmitting and receiving data with the SPI/Slave 12 in accordance with an SPI protocol. The SPI block 41-1 includes a controller (CNTR) 41-1-4, an SCK generator 41-1-3, a shift register 41-1-1, and a buffer/memory 41-1-2. The controller 41-1-4 controls a timing and a frequency of an SCK to be outputted from the SCK generator 41-1-3 on the basis of SPI control information supplied from the SPI/Master 11. The controller 41-1-4 activates a CS signal corresponding to the SPI/Slave 12, and when the SCK generator 41-1-3 outputs the SCK, the shift register 41-1-1 outputs SPI data in synchronization with the SCK, and the SPI data is supplied to the SPI/Slave 12 through the S_MOSI pin. Further, the SPI data outputted from the SPI/Slave 12 via the S_MISO pin is inputted to the shift register 41-1-1 in synchronization with the SCK. Besides, the S_SerDes 41 includes a packet encoder (ECP) 41-2, a packet decoder (DCP) 41-3, the DLL 41-4, and a PHY layer block (PHY) 41-5. The ECP 41-2 of the S_SerDes 41 converts SPI data saved in the buffer/memory 41-1-2, into a packet (SPI packet) that conforms to the TDD method. The DLL 41-4 generates an UP Link packet by combining the SPI packet generated by the ECP 41-2 with the other transmission packets other than the SPI packet. The PHY 41-5 transmits the UP Link packet to the S_SerDes 41 through an UP Link.

FIG. 5 is a diagram for explaining information that is included in transmission packets generated by the ECPs 31-2 and 41-2. For each of information units in the transmission packet in FIG. 5, an identification symbol, an information name, a function in a transmission packet for data transmission from the SPI/Master 11 to the SPI/Slave 12, a function in a transmission packet for data transmission from the SPI/Slave 12 to the SPI/Master 11, and a description are associated with one another.

C-1 is a transmission mode which is issued as a command by the SPI/Master 11. The transmission mode included in a packet supplied from the SPI/Slave 12 is used by the SPI/Master 11 to monitor a state. When C-1 is 0, a batch of data blocks is transmitted within one frame period of TDD. When C-1 is 1, multiple data blocks divided according to multiple frame periods are transmitted.

C-2 is a Slave selector signal (CSn signal) which is issued as a command by the SPI/Master 11. The CSn signal included in the packet supplied from the SPI/Slave 12 is used by the SPI/Master 11 to monitor the state. With the CSn signal, the SPI/Master 11 selects the SPI/Slave 12 to communicate with. With the CSn signal, not only each of the SPI/Slaves 12 can be selected, but also a SerDes (M_SerDes 31 or S_SerDes 41) can be selected.

C-3 is an SCK frequency which is issued as a command by the SPI/Master 11. The SCK frequency included in a packet supplied from the SPI/Slave 12 is used by the SPI/Master 11 to monitor the state. C-3 is provided for the SPI/Master 11 to designate an SCK frequency of the SPI/Slave 12 side.

C-4 is an SPI mode which is issued as a command by the SPI/Master 11. The SPI mode included in a packet supplied from the SPI/Slave 12 is used by the SPI/Master 11 to monitor the state. For example, when C-4 is 0, mode=0 which is illustrated in FIG. 3A is selected. When C-4 is 1, mode=1 which is illustrated in FIG. 3B is selected. When C-4 is 2, mode=2 which is illustrated in FIG. 3C is selected. When C-4 is 3, mode=3 which is illustrated in FIG. 3D is selected.

C-5 is the total number of data blocks DB, which is information provided by the SPI/Master 11. The total number of DBs included in a packet supplied from the SPI/Slave 12 is used by the SPI/Master 11 to monitor the state. When C-1 is 0 (when divided DBs are transmitted), C-5 is 1. The SPI/Slave 12 returns the number of DBs received after start of SPI communication.

C-6 is the position of the current data block DB, which is information provided by the SPI/Master 11. C-6 is not included in a packet supplied from the SPI/Slave 12. C-6 that is 0 indicates invalid information. In a case where C-1 is 0, C-6 is 0. C-6 that is 1 indicates the head divided data piece. C-6 that is 2 indicates a divided data piece other than the head and last divided data pieces. C-6 that is 3 indicates the last divided data piece.

C-7 is the state of the current data block DB, which is information provided by the SPI/Master 11 and the SPI/Slave 12. C-7 that is 0 indicates dummy data. C-7 that is 1 indicates valid data.

C-8 is the size of a data block DB, which is information provided by the SPI/Master 11. The data transmission size included in a packet supplied from the SPI/Slave 12 is used by the SPI/Master 11 to monitor the state. C-8 indicates the data transmission size in unit of bytes. The maximum size is 511 bytes.

C-9 is interrupt information of the SPI/Slave 12, which is not included in a packet that is transmitted by the SPI/Master 11, but is an interrupt flag included in a packet that is transmitted by the SPI/Slave 12. C-9 that is 0 indicates that there is no interrupt. C-9 that is 1 indicates that there is an interrupt.

C-10 is an operation state of the SPI/Slave 12 side, which is not included in a packet that is transmitted by the SPI/Master 11 but is included in a packet supplied from the SPI/Slave 12. C-10 that is 0 indicates a normal state. C-10 that is 1 indicates a busy state (the DCP 31-3 is not empty. C-10 that is 2 indicates that an error has occurred (SPI data has been broken).

C-11 is a reset of the SPI block 41-1 and is issued as a command by the SPI/Master 11. C-11 is not included in a packet supplied from the SPI/Slave 12. When C-11 is 0, the reset is not performed. When C-11 is 1, the SPI block 41-1 of the S_SerDes 41 is reset.

D-1 is SPI data that is transmitted together with C-1 to C-11 described above. SPI data that is transmitted by the SPI/Master 11 is outputted through the M_MOSI pin. SPI data that is transmitted by the SPI/Slave 12 is outputted through the S_MISO pin.

E-1 is CRC that is transmitted together with C-1 to C-11 and D-1. E-1 is included in the SPI data to be transmitted by the SPI/Master 11 and in the SPI data to be transmitted by the SPI/Slave 12. The CRC is used to detect an error in the control data C-1 to C-11 and the SPI data.

FIG. 6 is a timing chart of communication of the SPI/Master 11 with the SPI/Slave 12. FIGS. 7A and 7B are flowcharts each illustrating a processing procedure in which the SPI/Master 11 performs communication with the SPI/Slave 12. FIG. 8 is a diagram schematically depicting a packet that is transmitted and received by an UP Link and a Down Link. FIGS. 6 to 8 each depict a processing procedure of transmitting and receiving a batch of data blocks within one frame period of TDD.

First, the SPI/Master 11 generates SPI control information which is used by the ECP 31-2 and the DCP 31-3 of the M_SerDes 31, and transmits the SPI control information to the M_SerDes 31 (steps S1 to S4, time t1 to t4). The SPI control information includes an SPI transmission mode, SCK frequency information, an SPI mode, and the size and number of data blocks DB during SPI communication, for example. The SPI/Master 11 preliminarily saves the SPI control information in the buffer/memory 11-2.

In order to perform SPI communication with the M_SerDes 31, the controller 11-3 of the SPI/Master 11 brings M_CSn(0) into an active state (Low) (asserting) (step S1, time t1).

The controller 11-3 of the SPI/Master 11 controls the SCK generator 11-4 to output a clock M_SCK (step S2, time t2). In synchronization with the clock M_SCK, SPI control information saved in the buffer/memory 11-2 is sequentially read out and transferred to the shift register 11-1. A transmission mode, SCK frequency information, an SPI mode, a transmission data size, the number of data blocks, etc. are transmitted as the SPI control information. In synchronization with the clock M_SCK, the shift register 11-1 sequentially outputs the SPI control information (steps S2 to S3, time t2 to t3). The SPI control information is inputted to the M_SerDes 31 through the M_MOSI pin. In synchronization with M_SCK, the shift register 31-1-1 of the M_SerDes 31 fetches the SPI control information supplied from the SPI/Master 11.

In parallel with fetching the SPI control information supplied from the SPI/Master 11, the shift register 31-1-1 transmits data held in the shift register 31-1-1, to the SPI/Master 11 through the M_MISO pin in synchronization with the M_SCK. This data is invalid and is indicated by a broken line in time t2 to t3 in FIG. 6. The SPI/Master 11 receives this data and then discards this data.

After completion of the data transfer from the SPI/Master 11, the controller 11-3 of the SPI/Master 11 causes the SCK generator 11-4 to stop generating the M_SCK and deasserts M_CSn(0) to be an idle state (step S4, time t4). When the M_SCK is stopped, the shift register 31-1-1 of the M_SerDes 31 transfers the held SPI control information supplied from the SPI/Master 11, to the buffer/memory 31-1-2.

The buffer/memory 31-1-2 of the M_SerDes 31 transfers the SPI control information supplied from the SPI/Master 11 to the ECP 31-2. The ECP 31-2 converts the SPI control information into an SPI packet.

Subsequently, for the purpose of carrying out data transmission to the SPI/Slave 12, the SPI/Master 11 transmits the SPI data to the M_SerDes 31. Specifically, the controller 11-3 of the SPI/Master 11 brings M_CSn(1) corresponding to the SPI/Slave 12 to an active state from the idle state (deasserting) (step S5, time t5).

Further, the controller 11-3 causes the SCK generator 11-4 to output the M_SCK (step S6, time t6). The buffer/memory 11-2 reads out a transmission data size of data to be transmitted to the SPI/Slave 12 and inputs the read data to the shift register 11-1. In synchronization with the M_SCK, the shift register 11-1 sequentially outputs the data for the SPI/Slave 12 through the M_MOSI pin (step S7, time t7).

The shift register 31-1-1 of the M_SerDes 31 sequentially fetches the data outputted from the SPI/Master 11, into the shift register 31-1-1 in synchronization with the SCK. After the transfer of the data of the transmission data size is completed, the controller 11-3 of the SPI/Master 11 causes the SCK generator 11-4 to stop outputting the M_SCK (step S8, time t8). Then, the controller 11-3 of the SPI/Master 11 brings the M_CSn(1) into an idle state (deasserting), and the SPI communication is finished (step S9, time t9).

When the M_SCK is stopped, the M_SerDes 31 transfers the data held in the shift register 31-1-1 to the buffer/memory 31-1-2. The buffer/memory 31-1-2 transfers the data transferred from the shift register 31-1-1, to the ECP 31-2. The ECP 31-2 generates data that includes the SPI control information received as a result of the communication performed in time t1 to t3, a CS signal (M_CSn(1)) for the SPI/Slave 12, and the data for the SPI/Slave 12. The ECP 31-2 generates a transmission packet by adding a flag indicating that the packet is valid, to the generated data.

The ECP 31-2 transmits, as an SPI packet 51 which is depicted in FIG. 8, the generated transmission packet to the DLL 31-4. The DLL 31-4 generates an UP Link packet 52 by combining the SPI packet 51 transmitted from the ECP 31-2 and another transmission packet, and outputs the UP Link packet 52 to the PHY layer block 31-5. The PHY layer block 31-5 outputs the received UP Link packet 52 to the cable 103 in accordance with an UP Link output timing according to TDD (step S10, time t10).

The S_SerDes 41 communicates with the M_SerDes 31 by the TDD method and also performs SPI communication with the SPI/Slave 12. The PHY layer block 41-5 of the S_SerDes 41 receives the UP Link Packet transmitted from the M_SerDes 31 via the cable 103 and outputs the UP Link Packet to the Link layer block (DLL) 41-4.

The Link layer block 41-4 of the S_SerDes 41 extracts, from the UP Link Packet, the SPI packet including the SPI data and outputs the SPI packet to the packet decoder (DCP) 41-3. On the basis of the CSn information (C-2) included in the received SPI packet, the DCP 41-3 detects that the SPI/Slave 12 is an SPI communication target. Then, in order to start SPI communication with the SPI/Slave 12, the controller 41-1-4 detects that the SPI data has been fully transmitted on the basis of the transmission mode information (C-1) included in the SPI packet, obtains the number of SCK cycles required to perform SPI communication once on the basis of the number of the SPI data pieces (C-5) and the SPI data size (C-8), and then brings the Slave select signal S_CS into an active state (asserting) (step S11, time t11).

Next, the controller 41-1-4 of the S_SerDes 41 obtains the SCK frequency information (C-3) included in the SPI packet and causes the SCK generator 41-1-3 to output S_SCK by the obtained frequency (step S12, time t12). Here, the phase relation between S_CS and SCK follows the SPI mode (C-4) in the SPI packet. Accordingly, the S_SerDes 41 is allowed to transfer SPI data to the SPI/Slave 12. Data to be transferred to the SPI/Slave 12 is the SPI packet (D-1) and is saved in the buffer/memory 41-1-2.

The shift register 41-1-1 of the S_SerDes 41 sequentially outputs, through the S_MOSI pin, the SPI data transferred from the buffer/memory 41-1-2 in accordance with SCK supplied by the SCK generator 41-1-3 (step S13, time t13). In parallel with this, SPI data to be outputted from the SPI/Slave 12 to the S_MISO pin is saved in the shift register 41-1-1, and then is transferred to the buffer/memory41-1-2 at an appropriate timing.

The SPI/Slave 12 sequentially fetches the SPI data from the S_MOSI pin of the S_SerDes 41, into the shift register 12-1 in synchronization with the S_SCK, and further, sequentially outputs the data held in the shift register 12-1 through the S_MISO pin (step S14, time t14).

After driving the S_SCK for the defined SPI data size (C-8), the controller (41-1-4) stops the SCK and brings the S_CS back into an idle state (deasserting) in order to finish the SPI communication (step S15, time t15). In parallel with this, the SPI/Slave 12 transfers the SPI data transmitted from the S_MOSI pin of the S_SerDes 41 to the buffer/memory 12-2 at an appropriate timing while receiving the SPI data from the S_MOSI pin so that data reception from the SPI/Master 11 is finally completed.

The buffer/memory 41-1-2 transfers the SPI data received from the SPI/Slave 12 to the packet encoder (ECP) 41-2 in order to transmit the SPI data to the SPI/Master 11. The ECP 41-2 adds, to the SPI packet 53, the received SPI data and SPI control information that is obtained from the SPI packet by the ECP 41-2. In addition, the ECP 41-2 adds, to the SPI packet, the information (C-10) indicating an operation state of the SPI/Slave 12 and the CRC (E-1), which are illustrated in FIG. 5.

Moreover, in a case where the SPI/Slave 12 outputs an interrupt signal (C-9), the ECP 41-2 further adds information regarding the interrupt signal to the SPI packet 53. In this case, SPI data supplied from the SPI/Slave 12 is not transmitted by the SPI packet 53. The reason for providing the interrupt signal is that the CS signal and the SCK are controlled by the SPI/Master 11 alone in the SPI protocol, and thus, the SPI/Slave 12 cannot actively output any data. Accordingly, the SPI/Slave 12 outputs the interrupt signal to wait for a command from the SPI/Master 11.

The Link layer block (DLL) 41-4 generates a Down Link packet 54 by combining the SPI packet 53 received from the ECP 41-2 with another transmission packet and outputs the Down Link packet 54 to the PHY layer block 41-5. The PHY layer block 41-5 outputs the received Down Link packet 54 to the cable 103 in accordance with a Down Link output timing (step S16, time t16).

The PHY layer block 31-5 of the M_SerDes 31 receives the Down Link packet including the SPI packet 53 supplied from the SPI/Slave 12 and outputted from the S_SerDes 41 and outputs the Down Link packet to the DLL 31-4. The DLL 31-4 extracts the SPI packet 53 from the received Down Link packet 54 and outputs the SPI packet 53 to the packet decoder (DCP) 31-3.

When receiving SPI data O_DB#1 from the Master 11, the DCP 31-3 of the M_SerDes 31 simultaneously receives a packet including I_DB#1 to be transmitted to the Master 11 and stores the packet in the buffer/memory 31-1-2. In order to indicate that the valid SPI data I_DB#1 has been returned from the SPI/Slave 12, the buffer/memory 31-1-2 asserts the interrupt signal M_INT (step S17, time t17). After receiving the interrupt signal M_INT, the controller 11-3 of the SPI/Master 11 starts SPI communication to read out, from the M_SerDes 31, the SPI data supplied from the SPI/Slave 12 and activates M_CSn(1) (asserting) (step S18, time t18).

The controller 11-3 of the SPI/Master 11 controls the SCK generator 11-4 to output M_SCK (11-10-2) (step S19, time t19). In synchronization with the SCK, the shift register 11-1 sequentially fetches the data by the transfer data size (c-8) which is defined in Frame#1, from the M_MISO pin. Here, the buffer/memory 31-1-2 of the M_SerDes 31 transfers the data supplied form the SPI/Slave 12 to the shift register 31-1-1 at an appropriate timing, and the shift register 31-1-1 sequentially outputs the data in synchronization with the SCK generator 11-4, as previously explained. The outputted data is fetched through the M_MISO pin (step S20, time t20). In parallel with this, the SPI/Master 11 reads out, from the buffer/memory 11-2, SPI data to be next transferred to the SPI/Slave 12, saves the SPI data in the shift register 11-1, and sequentially outputs the SPI data through the M_MOSI pin from the shift register 11-1 (step S21, time t21). After necessary data is read out, the buffer/memory 31-1-2 recovers the interrupt signal M_INT into an idle state (deasserting) (step S22, time t22).

As a result of the operations explained so far, transfer of SPI data between the SPI/Master 11 and the SPI/Slave 12 is completed. The above series of operations is repeated as many times as the number of times of necessary SPI data transfers (step S23, time t23).

When reading out the last SPI data piece from the SPI/Slave 12, the SPI/Master 11 asserts M_CSn(1) in order to output dummy data (step S24, time t24). The dummy data is invalid data transfer of which to an SPI Slave is not required. Therefore, the dummy data is discarded instead of being transferred from the shift register 31-1-1 to the buffer/memory 31-1-2 in the M_SerDes 31 (step S25, time t25). The last data piece supplied from the SPI/Slave 12 is outputted from the shift register 31-1-1 of the M_SerDes 31 through the M_MISO pin and is fetched into the shift register 11-1 of the SPI/Master 11 (step S26, time t26).

In the first embodiment, within one frame period of the TDD method, a batch of data transmitted, by SPI communication, from the SPI/Master 11 to the M_SerDes 31 can be transmitted to the S_SerDes 41 through an UP Link, and a batch of data transmitted, by SPI communication, from the SPI/Slave 12 to the S_SerDes 41 can be transmitted to the M_SerDes 31 through a Down Link, in the abovementioned manner. Accordingly, SPI communication which is full-duplex communication and TDD communication which is half-duplex communication are combined together, and serial communication between the SPI/Master 11 and the SPI/Slave 12 can be performed via the M_SerDes 31 and the S_SerDes 41.

### (Second Embodiment)

In the second embodiment, data to be transmitted and received through SPI communication is divided according to multiple frame periods in a TDD method.

The communication system 2 according to the second embodiment has a configuration similar to that in FIG. 1. However, there is a difference therebetween in SPI control information to be transmitted from the SPI/Master 11 to the M_SerDes 31.

FIG. 9 is a timing chart of a case where a process of transmitting divided data pieces within each frame period is repeated for multiple frames. FIGS. 10A, 10B, and 10C are flowcharts each illustrating a processing procedure of the communication system 2 that operates in accordance with a timing illustrated in FIG. 9.

At steps S31 to S38 (time t31 to t38) in FIG. 10A which are similar to steps S1 to S8 (time t1 to t8) in FIG. 7, the SPI/Master 11 generates SPI control information and sets the SPI control information in the ECP 31-2 and the DCP 31-3 of the M_SerDes 31. In the processing operation in step S39 and later which is basically similar to that in FIGS. 7A and 7B, data to be transmitted within one SPI frame is divided into multiple pieces in FIGS. 9, 10A, 10B, and 10C, so that each of the divided data pieces is transmitted within one frame period of TDD. A signal that is transmitted within one frame period of TDD is referred to as a TDD burst signal.

Until transfer of all the divided data pieces in the SPI frame is completed, the active state of the Slave Select signal M_CSn(1) between the SPI/Master 11 and the M_SerDes 31 and the active state of the Slave Select signal S_CS between the S_SerDes 41 and the SPI/Slave 12 are kept.

The SPI/Master 11 asserts the CS signal (M_CSn(1)) to start transfer of the SPI data (step S35, time t35). The SPI/Master 11 causes the SCK generator 11-4 to output the M_SCK for the purpose of transmitting one divided data piece (data block DB) (step S36, time t36).

Subsequently, the SPI/Master 11 sequentially outputs SPI data from the shift register 11-1 and outputs the SPI data through the M_MOSI pin in synchronization with the SCK (step S37, time t37). Further, the SPI/Master 11 outputs, to the M_SerDes 31, a CS signal corresponding to the SPI/Slave 12 that is a communication target (step S38, time t38). Subsequently, the ECP 31-2 of the M_SerDes 31 generates a packet including the SPI data and the CS signal (step S39, time t39). The PHY layer block 31-5 combines this packet with another transmission packet so that an UP Link packet is generated. The UP Link packet is transmitted to the S_SerDes 41 through UP Link.

The SPI/Master 11 continues asserting the CS signal until all the divided data pieces are transmitted (step S40, time t40). The SPI/Master 11 stops the output of the M_SCK from the SCK generator 11-4 until the next divided data piece is transmitted (step S41, time t41).

The S_SerDes 41 obtains, from the received packet, the CS signal and the SPI data and asserts S_CS (step S42, time t42). The controller 41-1-4 of the S_SerDes 41 causes the SCK generator 41-1-3 to output S_SCK (step S43, time t43). The S_SerDes 41 temporarily saves the SPI data in the received packet into the buffer/memory 41-1-2, and then transfers the SPI data to the shift register 41-1-1. The shift register 41-1-1 sequentially outputs the data in synchronization with the S_SCK. The outputted data is inputted to the SPI/Slave 12 through the S_MOSI pin (step S44, time t44). Further, the data outputted from the shift register 12-1 of the SPI/Slave 12 in synchronization with the S_SCK is inputted to the S_SerDes 41 through the S_MISO pin (step S45, time t45).

The DLL 41-4 of the S_SerDes 41 generates a transmission packet including the data supplied from the S_MISO pin. The PHY layer block 41-5 transmits the transmission packet to a Down Link at a timing determined by the TDD method (step S46, time t46).

The DLL 31-4 of the M_SerDes 31 transmits the SPI packet included in the transmission packet transmitted from the S_SerDes 41, to the DCP 31-3. The DCP 31-3 receives a packet including I_DB#1 which is transmitted to the Master 11 at the same time as when SPI data 0_DB#1 is received from the Master 11, and saves the packet in the buffer/memory 31-1-2. In order to indicate that the valid SPI data I_DB#1 is returned from the SPI/Slave 12, the buffer/memory 31-1-2 asserts the interrupt signal M_INT (step S47, time t47).

Upon detecting that the M_INT has been asserted, the SPI/Master 11 causes the SCK generator 11-4 to output the M_SCK (step S48, time t48). The buffer/memory 11-2 transfers data to be next transmitted, to the shift register 11-1, and the shift register 11-1 outputs the SPI data through the M_MOSI pin in synchronization with the M_SCK (step S49, time t49). In parallel with this, the data outputted from the M_SerDes 31 through the M_MISO pin is fetched into the shift register 11-1 (step S50, time t50).

After reading out all the data pieces supplied from the M_SerDes 31, the SPI/Master 11 recovers the M_INT to an idle state (deasserting) (step S51, time t51).

The S_SerDes 41 maintains the active state of the S_CS (asserting) until all the divided data pieces are transmitted (step S52, time t52). Further, output of the S_SCK from the SCK generator 41-1-3 of the S_SerDes 41 is stopped until the next SPI data is transmitted from the M_SerDes 31 (step S53, time t53).

Thereafter, the processing operations in steps S40 to S53 are repeated (step S54, time t54). When the M_SerDes 31 transmits the last divided packet piece by an UP Link (step S55, time t55), the S_SerDes 41 outputs the S_SCK (step S56, time t56). Then, the S_SerDes 41 outputs the SPI data through the S_MOSI pin (step S57, time t57), and further, receives the last SPI data piece from the SPI/Slave 12 through the S_MISO pin (step S58, time t58).

After receiving the last SPI data piece, the S_SerDes 41 brings the S_CS into an idle state (deasserting) (step S59, time t59). Also, the S_SerDes 41 transmits a transmission packet including the last SPI data piece to the M_SerDes 31 by a Down Link (step S60, time t60).

The M_SerDes 31 brings the M_INT into an active state (step S61, time t61), which is similar to step S47. Further, the M_SerDes 31 causes the SCK generator 11-4 of the SPI/Master 11 to output the M_SCK (step S62, time 62). In synchronization with the M_SCK, the data outputted from the shift register 31-1-1 through the M_MISO pin is fetched into the shift register 11-1 of the SPI/Master 11 (steps S63 to S64, time t63 to t64). After all the data pieces are fetched, the SPI/Master 11 brings the CS signal into an idle state (step S65, time t65). The data outputted from the shift register 11-1 at step S63 is discarded (step S66, time t66) because this data is dummy data.

In the second embodiment, therefore, divided data pieces which are obtained by dividing a batch of data transmitted from the SPI/Master 11 to the M_SerDes 31 by SPI communication into multiple pieces can be transmitted to the S_SerDes 41 by an UP Link in multiple frame periods of the TDD method, and divided data pieces which are obtained by dividing a batch of data transmitted from the SPI/Slave 12 to the S_SerDes 41 by SPI communication can be transmitted to the M_SerDes 31 by a Down Link in multiple frame periods of the TDD method.

### (Third Embodiment)

In the third embodiment, the SPI/Master 11 performs serial communication with the multiple SPI/Slaves 12.

FIG. 11 is a block diagram of a main part of the communication system 2 including a communication device according to the third embodiment. FIG. 11 depicts the S_SerDes 41 and the multiple SPI/Slaves 12. The internal configurations of each SPI/Slave 12 and the M_SerDes 31 are similar to those in FIG. 1, and thus are omitted in FIG. 11. In addition, constituent parts in FIG. 11 common to those in FIG. 1 are denoted by the same reference signs.

The SPI/Master 11 designates a CSn signal for the SPI/Slave 12 to communicate with, by using SPI control information that is transmitted to the M_SerDes 31. The controller 41-1-4 of the S_SerDes 41 activates the CSn signal designated by the SPI/Master 11. FIG. 11 depicts an example in which two SPI/Slaves 12_1 and 12_2 are connected to the S_SerDes 41.

In a case where data communication with the SPI/Slave 12_1 is desired, the SPI/Master 11 sets the CSn signal to CS1 in the SPI control signal. Accordingly, the controller 41-1-4 of the S_SerDes 41 brings a S_CS1 pin for outputting the CS1 signal, into an active state. The CS1 signal transmitted from the S_CS1 pin is inputted to the SPI/Slave 12_1. Therefore, the SPI/Slave 12_1 receives SPI data in synchronization with an S_SCK supplied from the S_SerDes 41, and transmits SPI data to the S_SerDes 41 in synchronization with the S_SCK.

Further, in a case where data communication with the SPI/Slave 12_2 is desired, the SPI/Master 11 sets a CSn signal to CS2 in the SPI control signal. Accordingly, the controller 41-1-4 of the S_SerDes 41 brings an S_CS2 pin for outputting the CS2 signal, into an active state. The CS2 signal transmitted from the S_CS2 pin is inputted to the SPI/Slave 12_2. Therefore, the SPI/Slave 12_2 receives SPI data in synchronization with an S_SCK supplied from the S_SerDes 41, and transmits SPI data to the S_SerDes 41 in synchronization with the S_SCK.

The communication system 2 in FIG. 11 depicts an example in which the SPI/Master 11 designates the SPI/Slave 12 to communicate with, by using a CSn signal included in an SPI control signal. However, the multiple SPI/Slaves 12 may be connected in a daisy chain, as depicted in FIG. 12.

FIG. 12 is a block diagram of a main part of the communication system 2 including a communication device according to one modification of FIG. 11. Two SPI/Slaves 12 that can simultaneously perform serial communication with the SPI/Master 11 are depicted in FIG. 12. However, three or more SPI/Slaves 12 may be configured so as to simultaneously perform serial communication with the SPI/Master 11.

The respective shift registers 12-1 of the two SPI/Slaves 12_1 and 12_2 in FIG. 12 are daisy-chained with each other. Data outputted from an MSB of the shift register 12-1 of the SPI/Slave 12_2 in synchronization with an SCK, is inputted to an LSB of the shift register 12-1 of the SPI/Slave 12_1, and further, the data outputted from the MSB is transmitted to the S_SerDes 41 by SPI communication.

The communication device in FIG. 12 needs to repeat steps S24 to S26 in FIG. 6 as many times as the number of the SPI/Slaves 12.

In the third embodiment, therefore, the SPI/Master 11 designates the SPI/Slaves 12 by using respective CSn signals included in the SPI control information, whereby bidirectional serial communication with the multiple SPI/Slaves 12 can be performed. Further, if the multiple SPI/Slaves 12 are daisy-chained, the SPI/Master 11 can perform serial communication with the multiple SPI/Slaves 12 simultaneously.

The scope of protection is defined by the appended claims.

### [Reference Signs List]

1a: Communication device
1b: Communication device
2: Communication system
11: SPI/Master
11-1: Sequential shift register
11-1: Shift register
11-2: Buffer/memory
11-3: Controller
11-4: SCK generator
12: SPI/Slave
12-1: Shift register
12-2: Buffer/memory
31: M_SerDes
31-1: SPI block
31-1-1: Shift register
31-1-2: Buffer/memory
31-3: Packet decoder (DCP)
31-5: PHY layer block
32: Peripheral device
41: S_SerDes
41-1: SPI block
41-1-1: Shift register
41-1-2: Buffer/memory
41-1-3: SCK generator
41-1-4: Controller
41-2: Packet encoder (ECP)
41-3: Packet decoder (DCP)
41-4: Link layer block (DLL)
41-5: PHY layer block
42: Peripheral devices
51: SPI packet
52: UP Link packet
53: SPI packet
54: Down Link packet
103: Cable

## Claims

1. A communication device (1a) comprising:
a communication section (31-4) that configured to transmit , as a batch of data blocks (DB), an SPI (Serial Peripheral Interface)-compliant serial signal group transmitted from a Master (11) to the communication section (34-4) in synchronization with a clock (SCK), to a communication partner device (1b) within one frame period of a predetermined communication protocol or to transmit the serial signal group as multiple data blocks (DB) divided according to multiple frame periods of the predetermined communication protocol, to the communication partner device (1b)
a memory (31-1-2) that is configured to save an SPI-compliant first serial signal group transmitted from the Master (11) in synchronization with the clock (SCK) and to save an SPI-compliant second serial signal group transmitted from a Slave (12) in synchronization with the clock (SCK);
a packet encoder (31-2) that is configured to convert the first serial signal group saved in the memory (31-1-2) into a first packet of the predetermined communication protocol, wherein the first packet includes frequency information regarding the clock; and
a packet decoder (31-3) that is configured to convert a second packet of the predetermined communication protocol received from the communication partner device (1b) into the second serial signal group; wherein
the communication section (31-4) is configured to transmit the first packet to and to receive the second packet from the communication partner device (1b) by the predetermined communication protocol according to TDD (Time Division Duplex) or according to FDD (Frequency Division Duplex).

2. The communication device (1a) according to claim 1, wherein
the first packet includes polarity information regarding the clock (SCK), and phase information regarding the clock (SCK) with respect to a data signal of the SPI-compliant first serial signal group.

3. The communication device (1a) according to claim 2 , wherein
the first packet includes information indicating that the batch of data blocks (DB) is included in the one frame period or information indicating that the multiple data blocks (DB) divided according to the multiple frame periods are included.

4. The communication device (1a) according to claim 3, wherein,
in a case where the first packet includes the multiple data blocks (DB), the first packet includes a total number of the data blocks (DB) and information regarding division positions of the data blocks (DB).

5. The communication device (1a) according to claim 3, wherein
the first packet includes information regarding a size of the data block (DB).

6. The communication device (1a) according to any one of claims 1 to 5, wherein
the first packet includes information indicating whether the data block (DB) is valid or invalid.

7. The communication device (1a) according to any one of claims 1 to 6, wherein
the first packet includes information indicating a reset of the Slave (12).

8. The communication device (1a) according to any one of claims 1 to 7, wherein
the second packet includes at least one of information indicating an operation state of the Slave (12) and interrupt information from the Slave (12).

9. The communication device (1a) according to claim 8, wherein,
in a case where the interrupt information is included in the second packet and in a case where the second packet itself arrives at the memory (31-1-2) from the communication partner device (1b), the memory (31-1-2) is configured to determine that the Slave (12) has requested to read out a state of the Slave (12) and to transmit an interrupt signal to the Master (11).

10. The communication device (1a) according to any one of claims 1 to 9, wherein
the first packet includes information regarding a Slave (12) select signal which is included in the SPI-compliant first serial signal group and by which the communication partner device (1b) or the Slave (12) is selected, in particular, wherein
the packet encoder (41-2) transmits the first packet to, as a destination, the communication partner device (1b) or the Slave (12) selected by the Slave (12) select signal.

11. The communication device (1a) according to any one of claims 1 to 10, further comprising:
a shift register (31-1-1) that is configured to sequentially save each of serial signals included in the first serial signal group, in the memory (31-1-2) in synchronization with the clock (SCK) and to sequentially transmit each of serial signals included in the second serial signal group, to the Master (11) in synchronization with the clock (SCK), and/or wherein
the communication section (31-4) is configured to transmit the first packet at a first timing that is determined by the predetermined communication protocol and to receive the second packet at a second timing that is determined by the predetermined communication protocol, and/or wherein,
when a Slave (12) select signal transmitted from the Master (11) is changed from a first logic to a second logic, the packet encoder (31-2) is configured to determine
that transmission of the first serial signal group from the Master (11) is completed.

12. A communication device (1b) comprising:
a communication section (41-4) that, in synchronization with a clock (SCK) generated on a basis of clock frequency information included in a packet supplied from a communication partner device (1a), is configured to transmit an SPI-compliant serial signal group transmitted from a Slave (12), to a communication partner device (1a) as a batch of data blocks (DB) within one frame period of a predetermined communication protocol or to transmit the serial signal group by multiple data blocks (DB) divided according to multiple frame periods of the predetermined communication protocol, to the communication partner device (1a)
a packet decoder (41-3) that is configured to convert a first packet of the predetermined communication protocol received from the communication partner device (1a) into an SPI-compliant first serial signal group;
a clock generator (41-1-3) that is configured to generate the clock (SCK) based on the clock frequency information included in the first serial signal group;
a memory (41-1-2) that is configured to save the first serial signal group in synchronization with the clock (SCK) and to save an SPI-compliant second serial signal group transmitted from a Slave (12) in synchronization with the clock (SCK); and
a packet encoder (41-2) that is configured to convert the second serial signal group saved in the memory (41-1-2) into a second packet of the predetermined communication protocol; wherein
the communication section (41-4) is configured to transmit the first packet to or to receive the second packet from the communication partner device (1a) by the predetermined communication protocol according to TDD (Time Division Duplex) or according to FDD (Frequency Division Duplex).

13. The communication device (1b) according to claim 12, wherein
the second packet includes information indicating that a batch of data blocks (DB) to be transmitted within one frame period of the second serial signal group is included or information indicating that multiple data blocks (DB) to be dividedly transmitted according to multiple frame periods are included, and/or wherein
the second packet includes information indicating whether or not the Slave (12) is in a busy state of being unable to receive the first serial signal group and information indicating whether or not an error is included in the first serial signal group received by the Slave (12), and/or wherein
the second packet includes interrupt information that is a request to cause a Master (11) to read out a state of the Slave (12), and/or further comprising:
a shift register (41-1-1) that saves, in the memory (41-1-2), each of serial signals included in the second serial signal group and transmits each of serial signals included in the first serial signal group to the Slave (12), and/or wherein
the communication section (41-4) transmits the second packet at a first timing that is determined by the predetermined communication protocol and receives the first packet at a second timing that is determined by the predetermined communication protocol.

14. A communication system (2) comprising:
the communication device (1a) according to claim 1 as a first communication device and the communication device according to claim 12 as a second communication device that transmit and receive a packet by a predetermined communication protocol, wherein
the first communication device (1a) is the communication partner device (1a) of the second communication device (1b) and the second communication device (1b) is the communication partner device (1b) of the first communication device (1a).

15. A communication method comprising:
transmitting, as a batch of data blocks (DB), an SPI-compliant serial signal group transmitted from a Master (11) in synchronization with a clock (SCK), to a communication partner device (1a;1b) within one frame period of a predetermined communication protocol or transmits the serial signal group by multiple data blocks (DB) divided according to multiple frame periods, to the communication partner device (1a;1b),
saving an SPI-compliant first serial signal group transmitted from the Master (11) in synchronization with the clock (SCK) and saving an SPI-compliant second serial signal group transmitted from a Slave (12) in synchronization with the clock (SCK);
converting the saved first serial signal group into a first packet of the predetermined communication protocol, wherein the first packet includes frequency information regarding the clock; and
converting a second packet of the predetermined communication protocol received from the communication partner device (1b) into the second serial signal group; wherein
transmitting and receiving the first packet and the second packet to and from the communication partner device (1b) by the predetermined communication protocol according to TDD (Time Division Duplex) or according to FDD (Frequency Division Duplex).

## Patentansprüche

1. Kommunikationsvorrichtung (1a), umfassend:
einen Kommunikationsabschnitt (31-4), der konfiguriert ist, um eine SPI (Serial Peripheral Interface)-kompatible serielle Signalgruppe, die von einem Master (11) an den Kommunikationsabschnitt (34-4) gesendet wird, als Stapel von Datenblöcken (DB) synchron mit einem Takt (SCK) an eine Kommunikationspartnervorrichtung (1b) innerhalb einer Frame-Periode eines vorgegebenen Kommunikationsprotokolls zu senden oder die serielle Signalgruppe als mehrere Datenblöcke (DB), die gemäß mehreren Frame-Perioden des vorgegebenen Kommunikationsprotokolls aufgeteilt sind, an die Kommunikationspartnervorrichtung (1b) zu senden,
einen Speicher (31-1-2), der konfiguriert ist, um eine vom Master (11) übertragene, SPI-konforme erste serielle Signalgruppe synchron mit dem Takt (SCK) zu speichern und eine von einem Slave (12) übertragene, SPI-konforme zweite serielle Signalgruppe synchron mit dem Takt (SCK) zu speichern;
einen Paketcodierer (31-2), der konfiguriert ist, um die im Speicher (31-1-2) gespeicherte erste serielle Signalgruppe in ein erstes Paket des vorgegebenen Kommunikationsprotokolls umzuwandeln, wobei das erste Paket Frequenzinformationen bezüglich des Takts einschließt; und
einen Paketdecodierer (31-3), der konfiguriert ist, um ein von der Kommunikationspartnervorrichtung (1b) empfangenes zweites Paket des vorgegebenen Kommunikationsprotokolls in die zweite serielle Signalgruppe umzuwandeln; wobei
der Kommunikationsabschnitt (31-4) konfiguriert ist, um das erste Paket an die Kommunikationspartnervorrichtung (1b) zu senden und das zweite Paket von diesem zu empfangen, und zwar durch das vorgegebene Kommunikationsprotokoll gemäß TDD (Time Division Duplex) oder gemäß FDD (Frequency Division Duplex).

2. Kommunikationsvorrichtung (1a) nach Anspruch 1, wobei
das erste Paket Polaritätsinformationen bezüglich des Takts (SCK) und Phaseninformationen bezüglich des Takts (SCK) in Bezug auf ein Datensignal der SPI-kompatiblen ersten seriellen Signalgruppe einschließt.

3. Kommunikationsvorrichtung (1a) nach Anspruch 2, wobei
das erste Paket Informationen einschließt, die angeben, dass der Stapel von Datenblöcken (DB) in der einen Frame-Periode eingeschlossen ist, oder Informationen, die angeben, dass die mehreren Datenblöcke (DB), die gemäß den mehreren Frame-Perioden aufgeteilt sind, eingeschlossen sind.

4. Kommunikationsvorrichtung (1a) nach Anspruch 3, wobei
in einem Fall, in dem das erste Paket mehrere Datenblöcke (DB) einschließt, das erste Paket eine Gesamtanzahl der Datenblöcke (DB) und Informationen bezüglich der Unterteilungspositionen der Datenblöcke (DB) einschließt.

5. Kommunikationsvorrichtung (1a) nach Anspruch 3, wobei
das erste Paket Informationen bezüglich einer Größe des Datenblocks (DB) einschließt.

6. Kommunikationsvorrichtung (1a) nach einem der Ansprüche 1 bis 5, wobei
das erste Paket Informationen einschließt, die angeben, ob der Datenblock (DB) gültig oder ungültig ist.

7. Kommunikationsvorrichtung (1a) nach einem der Ansprüche 1 bis 6, wobei
das erste Paket Informationen einschließt, die einen Reset des Slaves (12) anzeigen.

8. Kommunikationsvorrichtung (1a) nach einem der Ansprüche 1 bis 7, wobei
das zweite Paket mindestens eine Information, die einen Betriebszustand des Slaves (12) angibt, und Unterbrechungsinformationen vom Slave (12) einschließt.

9. Kommunikationsvorrichtung (1a) nach Anspruch 8, wobei
in einem Fall, in dem die Unterbrechungsinformationen im zweiten Paket eingeschlossen sind und in einem Fall, in dem das zweite Paket selbst von der Kommunikationspartnervorrichtung (1b) beim Speicher (31-1-2) ankommt, der Speicher (31-1-2) konfiguriert ist, um zu bestimmen, dass der Slave (12) das Auslesen eines Zustands des Slaves (12) angefordert hat, und um ein Unterbrechungssignal an den Master (11) zu senden.

10. Kommunikationsvorrichtung (1a) nach einem der Ansprüche 1 bis 9, wobei
das erste Paket Informationen über ein Slave (12)-Auswahlsignal einschließt, das in der SPI-konformen ersten seriellen Signalgruppe eingeschlossen ist und mit dem die Kommunikationspartnervorrichtung (1b) oder der Slave (12) ausgewählt wird, insbesondere wobei
der Paketcodierer (41-2) das erste Paket an die Kommunikationspartnervorrichtung (1b) oder den durch das Slave (12)-Auswahlsignal ausgewählten Slave (12) als Ziel sendet.

11. Kommunikationsvorrichtung (1a) nach einem der Ansprüche 1 bis 10, ferner umfassend:
ein Schieberegister (31-1-1), das konfiguriert ist, um jedes der in der ersten seriellen Signalgruppe eingeschlossenen seriellen Signale synchron mit dem Takt (SCK) nacheinander im Speicher (31-1-2) zu speichern und jedes der in der zweiten seriellen Signalgruppe eingeschlossenen seriellen Signale synchron mit dem Takt (SCK) nacheinander an den Master (11) zu senden, und/oder wobei
der Kommunikationsabschnitt (31-4) konfiguriert ist, um das erste Paket zu einem ersten Zeitpunkt zu senden, der durch das vorgegebene Kommunikationsprotokoll bestimmt wird, und das zweite Paket zu einem zweiten Zeitpunkt zu empfangen, der durch das vorgegebene Kommunikationsprotokoll bestimmt wird, und/oder wobei
wenn ein vom Master (11) gesendetes Slave (12)-Auswahlsignal von einer ersten Logik in eine zweite Logik geändert wird, der Paketcodierer (31-2) konfiguriert ist, um bestimmen, dass das Senden der ersten seriellen Signalgruppe vom Master (11) abgeschlossen ist.

12. Kommunikationsvorrichtung (1b), umfassend:
einen Kommunikationsabschnitt (41-4), der synchron mit einem Takt (SCK), der auf der Grundlage von Taktfrequenzinformationen erzeugt wird, die in einem von einer Kommunikationspartnervorrichtung (1a) gelieferten Paket eingeschlossen sind, konfiguriert ist, um eine von einem Slave (12) gesendete SPI-konforme serielle Signalgruppe als Stapel von Datenblöcken (DB) innerhalb einer Frame-Periode eines vorgegebenen Kommunikationsprotokolls an eine Kommunikationspartnervorrichtung (1a) zu senden oder die serielle Signalgruppe in mehreren Datenblöcken (DB), die gemäß mehreren Frame-Perioden des vorgegebenen Kommunikationsprotokolls aufgeteilt sind, an die Kommunikationspartnervorrichtung (1a) zu senden,
einen Paketdecodierer (41-3), der konfiguriert ist, um ein von der Kommunikationspartnervorrichtung (1a) empfangenes erstes Paket des vorgegebenen Kommunikationsprotokolls in eine SPI-kompatible erste serielle Signalgruppe umzuwandeln;
einen Taktgenerator (41-1-3), der konfiguriert ist, um den Takt (SCK) basierend auf den in der ersten seriellen Signalgruppe enthaltenen Taktfrequenzinformationen zu erzeugen;
einen Speicher (41-1-2), der konfiguriert ist, um die erste serielle Signalgruppe synchron mit dem Takt (SCK) zu speichern und eine von einem Slave (12) gesendete, SPI-konforme zweite serielle Signalgruppe synchron mit dem Takt (SCK) zu speichern; und
einen Paketcodierer (41-2), der konfiguriert ist, um die im Speicher (41-1-2) gespeicherte zweite serielle Signalgruppe in ein zweites Paket des vorgegebenen Kommunikationsprotokolls umzuwandeln; wobei
der Kommunikationsabschnitt (41-4) konfiguriert ist, um das erste Paket an die Kommunikationspartnervorrichtung (1a) zu senden oder das zweite Paket von diesem zu empfangen, und zwar durch das vorgegebene Kommunikationsprotokoll gemäß TDD (Time Division Duplex) oder gemäß FDD (Frequency Division Duplex).

13. Kommunikationsvorrichtung (1b) nach Anspruch 12, wobei
das zweite Paket Informationen einschließt, die angeben, dass ein Stapel von Datenblöcken (DB), die innerhalb einer Frame-Periode der zweiten seriellen Signalgruppe gesendet werden sollen, eingeschlossen ist, oder Informationen, die angeben, dass mehrere Datenblöcke (DB), die gemäß mehreren Frame-Perioden aufgeteilt gesendet werden sollen, eingeschlossen sind, und/oder wobei
das zweite Paket Informationen einschließt, die angeben, ob sich der Slave (12) in einem Besetztzustand befindet, in dem er die erste serielle Signalgruppe nicht empfangen kann, und Informationen, die angeben, ob in der vom Slave (12) empfangenen ersten seriellen Signalgruppe ein Fehler eingeschlossen ist, und/oder wobei
das zweite Paket Unterbrechungsinformationen einschließt, die eine Aufforderung darstellen, einen Master (11) zu veranlassen, einen Zustand des Slaves (12) auszulesen, und/oder ferner umfassend:
ein Schieberegister (41-1-1), das jedes der in der zweiten seriellen Signalgruppe eingeschlossenen seriellen Signale im Speicher (41-1-2) speichert und jedes der in der ersten seriellen Signalgruppe eingeschlossenen seriellen Signale an den Slave (12) sendet, und/oder wobei
der Kommunikationsabschnitt (41-4) das zweite Paket zu einem ersten Zeitpunkt, der durch das vorgegebene Kommunikationsprotokoll bestimmt wird, sendet und das erste Paket zu einem zweiten Zeitpunkt, der durch das vorgegebene Kommunikationsprotokoll bestimmt wird, empfängt.

14. Kommunikationssystem (2), umfassend:
die Kommunikationsvorrichtung (1a) nach Anspruch 1 als erste Kommunikationsvorrichtung und Kommunikationsvorrichtung nach Anspruch 12 als zweite Kommunikationsvorrichtung, die ein Paket über ein vorgegebenes Kommunikationsprotokoll senden und empfangen, wobei
die erste Kommunikationsvorrichtung (1a) die Kommunikationspartnervorrichtung (1a) der zweiten Kommunikationsvorrichtung (1b) ist und die zweite Kommunikationsvorrichtung (1b) die Kommunikationspartnervorrichtung (1b) der ersten Kommunikationsvorrichtung (1a) ist.

15. Kommunikationsverfahren, umfassend:
Senden einer SPI-konformen seriellen Signalgruppe, die von einem Master (11) synchron mit einem Takt (SCK) gesendet wird, als Stapel von Datenblöcken (DB) an eine Kommunikationspartnervorrichtung (1a; 1b) innerhalb einer Frame-Periode eines vorgegebenen Kommunikationsprotokolls oder Senden der seriellen Signalgruppe durch mehrere Datenblöcke (DB), die gemäß mehrerer Frame-Perioden aufgeteilt sind, an die Kommunikationspartnervorrichtung (1a; 1b),
Speichern einer vom Master (11) gesendeten, SPI-konformen ersten seriellen Signalgruppe synchron mit dem Takt (SCK) und Speichern einer von einem Slave (12) gesendeten, SPl-konformen zweiten seriellen Signalgruppe synchron mit dem Takt (SCK);
Umwandeln der gespeicherten ersten seriellen Signalgruppe in ein erstes Paket des vorgegebenen Kommunikationsprotokolls, wobei das erste Paket Frequenzinformationen bezüglich des Takts einschließt; und
Umwandeln eines von der Kommunikationspartnervorrichtung (1b) empfangenen zweiten Pakets des vorgegebenen Kommunikationsprotokolls in die zweite serielle Signalgruppe; wobei
Senden und Empfangen des ersten Pakets und des zweiten Pakets zu und von der Kommunikationspartnervorrichtung (1b) durch das vorgegebene Kommunikationsprotokoll gemäß TDD (Time Division Duplex) oder gemäß FDD (Frequency Division Duplex).

## Revendications

1. Dispositif de communication (1a) comprenant :
une section de communication (31-4) qui est configurée pour transmettre, en tant que lot de blocs de données (DB), un groupe de signaux série conformes à SPI (interface périphérique sérielle) transmis à partir d'un maître (11) à la section de communication (34-4) en synchronisation avec une horloge (SCK), à un dispositif partenaire de communication (1b) au cours d'une période de trame d'un protocole de communication prédéterminé ou pour transmettre le groupe de signaux série en tant que multiples blocs de données (DB) divisés selon de multiples périodes de trame du protocole de communication prédéterminé, au dispositif partenaire de communication (1b)
une mémoire (31-1-2) qui est configurée pour enregistrer un premier groupe de signaux série conformes à SPI transmis à partir du maître (11) en synchronisation avec l'horloge (SCK) et pour enregistrer un second groupe de signaux série conformes à SPI transmis à partir d'un esclave (12) en synchronisation avec l'horloge (SCK) ;
un encodeur de paquet (31-2) qui est configuré pour convertir le premier groupe de signaux série enregistré dans la mémoire (31-1-2) en un premier paquet du protocole de communication prédéterminé, dans lequel le premier paquet comporte des informations de fréquence concernant l'horloge ; et
un décodeur de paquet (31-3) qui est configuré pour convertir un second paquet du protocole de communication prédéterminé reçu du dispositif partenaire de communication (1b) en le second groupe de signaux série ; dans lequel
la section de communication (31-4) est configurée pour transmettre le premier paquet au, et pour recevoir le second paquet du, dispositif partenaire de communication (1b) par le protocole de communication prédéterminé selon un TDD (duplexage par répartition temporelle) ou selon un FDD (duplexage par répartition en fréquence).

2. Dispositif de communication (1a) selon la revendication 1, dans lequel
le premier paquet comporte des informations de polarité concernant l'horloge (SCK), et des informations de phase concernant l'horloge (SCK) par rapport à un signal de données du premier groupe de signaux série conformes à SPI.

3. Dispositif de communication (1a) selon la revendication 2, dans lequel
le premier paquet comporte des informations indiquant que le lot de blocs de données (DB) est inclus dans la période de trame précitée ou des informations indiquant que les multiples blocs de données (DB) divisés selon les multiples périodes de trame sont inclus.

4. Dispositif de communication (1a) selon la revendication 3, dans lequel,
dans un cas où le premier paquet comporte les multiples blocs de données (DB), le premier paquet comporte un nombre total des blocs de données (DB) et des informations concernant des positions de division des blocs de données (DB).

5. Dispositif de communication (1a) selon la revendication 3, dans lequel
le premier paquet comporte des informations concernant une taille du bloc de données (DB).

6. Dispositif de communication (1a) selon l'une quelconque des revendications 1 à 5, dans lequel
le premier paquet comporte des informations indiquant si le bloc de données (DB) est valide ou non valide.

7. Dispositif de communication (1a) selon l'une quelconque des revendications 1 à 6, dans lequel
le premier paquet comporte des informations indiquant une réinitialisation de l'esclave (12).

8. Dispositif de communication (1a) selon l'une quelconque des revendications 1 à 7, dans lequel
le second paquet comporte au moins l'une parmi des informations indiquant un état de fonctionnement de l'esclave (12) et des informations d'interruption en provenance de l'esclave (12).

9. Dispositif de communication (1a) selon la revendication 8, dans lequel,
dans un cas où les informations d'interruption sont incluses dans le second paquet et dans un cas où le second paquet lui-même arrive au niveau de la mémoire (31-1-2) en provenance du dispositif partenaire de communication (1b), la mémoire (31-1-2) est configurée pour déterminer que l'esclave (12) a demandé de lire un état de l'esclave (12) et de transmettre un signal d'interruption au maître (11).

10. Dispositif de communication (1a) selon l'une quelconque des revendications 1 à 9, dans lequel
le premier paquet comporte des informations concernant un signal de sélection d'esclave (12) qui est inclus dans le premier groupe de signaux série conformes à SPI et par lequel le dispositif partenaire de communication (1b) ou l'esclave (12) est sélectionné, en particulier, dans lequel
l'encodeur de paquet (41-2) transmet le premier paquet, en guise de destination, au dispositif partenaire de communication (1b) ou à l'esclave (12) sélectionné par le signal de sélection d'esclave (12).

11. Dispositif de communication (1a) selon l'une quelconque des revendications 1 à 10, comprenant en outre :
un registre à décalage (31-1-1) qui est configuré pour enregistrer séquentiellement chacun des signaux série inclus dans le premier groupe de signaux série, dans la mémoire (31-1-2) en synchronisation avec l'horloge (SCK) et pour transmettre séquentiellement chacun des signaux série inclus dans le second groupe de signaux série, au maître (11) en synchronisation avec l'horloge (SCK), et/ou dans lequel
la section de communication (31-4) est configurée pour transmettre le premier paquet à un premier moment qui est déterminé par le protocole de communication prédéterminé et pour recevoir le second paquet à un second moment qui est déterminé par le protocole de communication prédéterminé, et/ou dans lequel,
lorsqu'un signal de sélection d'esclave (12) transmis à partir du maître (11) est changé d'une première logique à une seconde logique, l'encodeur de paquet (31-2) est configuré pour déterminer qu'une transmission du premier groupe de signaux série à partir du maître (11) est achevée.

12. Dispositif de communication (1b) comprenant :
une section de communication (41-4) qui, en synchronisation avec une horloge (SCK) générée en fonction d'informations de fréquence d'horloge incluses dans un paquet alimenté à partir d'un dispositif partenaire de communication (1a) est configurée pour transmettre un groupe de signaux série conformes à SPI à partir d'un esclave (12), vers un dispositif partenaire de communication (1a) en tant que lot de blocs de données (DB) au cours d'une période de trame d'un protocole de communication prédéterminé ou pour transmettre le groupe de signaux série par de multiples blocs de données (DB) divisés selon de multiples périodes de trame du protocole de communication prédéterminé, au dispositif partenaire de communication (1a)
un décodeur de paquet (41-3) qui est configuré pour convertir un premier paquet du protocole de communication prédéterminé reçu du dispositif partenaire de communication (1a) en un premier groupe de signaux série conformes à SPI;
un générateur d'horloge (41-1-3) qui est configuré pour générer l'horloge (SCK) en fonction des informations de fréquence d'horloge incluses dans le premier groupe de signaux série ;
une mémoire (41-1-2) qui est configurée pour enregistrer le premier groupe de signaux série en synchronisation avec l'horloge (SCK) et pour enregistrer un second groupe de signaux série conformes à SPI transmis à partir d'un esclave (12) en synchronisation avec l'horloge (SCK) ; et
un encodeur de paquet (41-2) qui est configuré pour convertir le second groupe de signaux série enregistré dans la mémoire (41-1-2) en un second paquet du protocole de communication prédéterminé ; dans lequel
la section de communication (41-4) est configurée pour transmettre le premier paquet au, ou pour recevoir le second paquet du, dispositif partenaire de communication (1a) par le protocole de communication prédéterminé selon un TDD (duplexage par répartition temporelle) ou selon un FDD (duplexage par répartition en fréquence).

13. Dispositif de communication (1b) selon la revendication 12, dans lequel
le second paquet comporte des informations indiquant qu'un lot de blocs de données (DB) à transmettre au cours d'une période de trame du second groupe de signaux série est inclus, ou des informations indiquant que de multiples blocs de données (DB) à transmettre de manière divisée selon de multiples périodes de trame sont inclus, et/ou dans lequel
le second paquet comporte des informations indiquant si l'esclave (12) est ou non dans un état occupé étant incapable de recevoir le premier groupe de signaux série et des informations indiquant si une erreur est ou non incluse dans le premier groupe de signaux série reçu par l'esclave (12), et/ou dans lequel
le second paquet comporte des informations d'interruption qui sont une demande pour amener un maître (11) à lire un état de l'esclave (12), et/ou comprenant en outre :
un registre à décalage (41-1-1) qui enregistre, dans la mémoire (41-1-2), chacun des signaux série inclus dans le second groupe de signaux série et transmet chacun des signaux série inclus dans le premier groupe de signaux série à l'esclave (12), et/ou dans lequel
la section de communication (41-4) transmet le second paquet à un premier moment qui est déterminé par le protocole de communication prédéterminé et reçoit le premier paquet à un second moment qui est déterminé par le protocole de communication prédéterminé.

14. Système de communication (2) comprenant :
le dispositif de communication (1a) selon la revendication 1 en tant que premier dispositif de communication et le dispositif de communication selon la revendication 12 en tant que second dispositif de communication qui transmettent et reçoivent un paquet par un protocole de communication prédéterminé, dans lequel
le premier dispositif de communication (1a) est le dispositif partenaire de communication (1a) du second dispositif de communication (1b) et le second dispositif de communication (1b) est le dispositif partenaire de communication (1b) du premier dispositif de communication (1a).

15. Procédé de communication comprenant :
la transmission, en tant que lot de blocs de données (DB), d'un groupe de signaux série conformes à SPI transmis à partir d'un maître (11) en synchronisation avec une horloge (SCK), à un dispositif partenaire de communication (1a ;1b) au cours d'une période de trame d'un protocole de communication prédéterminé ou la transmission du groupe de signaux série par de multiples blocs de données (DB) divisés selon de multiples périodes de trame, au dispositif partenaire de communication (1a ; 1b),
l'enregistrement d'un premier groupe de signaux série conformes à SPI transmis à partir du maître (11) en synchronisation avec l'horloge (SCK) et l'enregistrement du second groupe de signaux série conformes à SPI transmis à partir d'un esclave (12) en synchronisation avec l'horloge (SCK) ;
la conversion du premier groupe de signaux série enregistré en un premier paquet du protocole de communication prédéterminé, dans lequel le premier paquet comporte des informations de fréquence concernant l'horloge ; et
la conversion d'un second paquet du protocole de communication prédéterminé reçu du dispositif partenaire de communication (1b) en le second groupe de signaux série ; dans lequel
la transmission et la réception du premier paquet et du second paquet vers le, et à partir du, dispositif partenaire de communication (1b) par le protocole de communication prédéterminé selon un TDD (duplexage par répartition temporelle) ou selon un FDD (duplexage par répartition en fréquence).
